# EUROPEAN PATENT APPLICATION

(11) **EP 4 589 905 A1**
(43) Date of publication of application: **23.07.2025**
(21) Application number: 23896718.6
(22) Date of filing: 27.11.2023
(51) Int. Cl.: H04L 41/0631

(54) **NETWORK PROBLEM ANALYSIS METHOD AND RELATED APPARATUS**

(30) Priority: 30.11.2022 CN 202211521732
(71) Applicant: Huawei Technologies Co., Ltd., Shenzhen, Guangdong 518129 (CN)
(72) Inventor: LIN, Ke, Shenzhen, Guangdong 518129 (CN); MIAO, Dandan, Shenzhen, Guangdong 518129 (CN); CHEN, Xin, Shenzhen, Guangdong 518129 (CN)
(74) Representative: Pfenning, Meinig & Partner mbB
(86) International application number: PCT/CN2023/134285
(87) International publication number: WO 2024/114567

(57) **Abstract**

Embodiments of this application disclose a network problem analysis method and a related apparatus. The method includes: obtaining network problem data information, where the network problem data information indicates a network problem that occurs on a network element in a first network; obtaining user data information, where the user data information is user data information of at least one user served by the first network, and the user data information includes a key performance indicator KPI of the user; and generating a network problem analysis result based on the network problem data information and the user data information, where the network problem analysis result indicates an impact degree of the network problem on the KPI. According to the method, a quantized network problem analysis result is obtained, so that the network problem analysis result is more intuitive, and accuracy of analyzing the network problem is improved.

## Description

This application claims priority to Chinese Patent Application No. CN202211521732.6, filed with the China National Intellectual Property Administration on November 30, 2022 and entitled "NETWORK PROBLEM ANALYSIS METHOD AND RELATED APPARATUS", which is incorporated herein by reference in its entirety.

### TECHNICAL FIELD

This application relates to the field of network technologies, and in particular, to a network problem analysis method and a related apparatus.

### BACKGROUND

Currently, a telecommunication network aims to ensure stable and reliable user service quality of a user in the network. Therefore, a large quantity of operation and maintenance activities use the user service quality as a measurement indicator to achieve corresponding business value. Network problem management accounts for a large proportion of the operation and maintenance activities, and specifically includes monitoring, analyzing, dispatching, diagnosing, and rectifying a network problem. The network problem includes but is not limited to a network element alarm, network element performance deterioration, and a network element change accident.

In a current process of analyzing the network problem, due to limited operation and maintenance resources, a focus is on timeliness of handling the network problem. Generally, network problems are associated, compressed, or filtered, to reduce a quantity of network problems that need to be processed. Based on experience of a network operation and maintenance engineer or according to a rule, a compressed network problem is dispatched. According to the method, co-existence analysis is performed on a plurality of network problems, to describe correlation degrees of these network problems. Then, a predefined rule is used to perform severity level classification on network problems with high correlation degrees.

However, because a running environment of the telecommunication network and a use behavior of a user service are characterized by high uncertainty, alarm occurrence is highly random. In addition, analysis based only on a co-existence degree of user data is susceptible to fluctuation impact of the user data, and an impact degree caused by the network problems cannot be accurately quantified. As a result, accuracy of a network problem analysis result is low.

### SUMMARY

According to a first aspect, an embodiment of this application provides a network problem analysis method. The method is applied to a first network. The first network includes a plurality of network elements. The method includes:
obtaining network problem data information, where the network problem data information indicates a network problem that occurs on the network element in the first network;
obtaining user data information, where the user data information is user data information of at least one user served by the first network, and the user data information includes a key performance indicator KPI of the user; and
generating a network problem analysis result based on the network problem data information and the user data information, where the network problem analysis result indicates an impact degree of the network problem on the KPI, and
the network problem analysis result includes:
   a confidence level of the KPI and/or a deterioration degree of the KPI, where the confidence level of the KPI is a confidence level of impact of the network problem on the KPI, and the deterioration degree of the KPI indicates a change degree of the KPI after the network problem occurs.

Specifically, the network problem data information includes but is not limited to: alarm information of the network element, performance deterioration information of the network element, and change information of the network element.

For example, the alarm information of the network element includes the following. When the network element is a cell, the alarm information of the network element may be alarm information indicating that the cell is unavailable, the cell is considered as a logical network element, a network device may include (or manage) one or more cells, and the network device provides a wireless communication service for a user (for example, a terminal device) by using the cell managed by the network device; when the network element is a network device such as a radio frequency unit, the alarm information of the network element may be link interruption information of the network device; or when the network element is a network device such as a site, the alarm information of the network element may be out-of-service alarm information of the network device.

For example, the performance deterioration information of the network element includes that a connection establishment failure rate is greater than a preset threshold, or load of a device is greater than a preset threshold.

For example, the change information of the network element includes that configuration information of a neighboring cell changes, or a carrier is newly added.

Optionally, after obtaining the network problem data information, a network problem analysis apparatus may further standardize the information to obtain standardized network problem data information. For example, the standardized network problem data information includes: a network problem identifier, a network problem type, and a location at which the network problem occurs (in other words, identification information of a network element on which the network problem occurs).

The user data information is user data information of each user served by a network element in the first network. For example, the user data information includes but is not limited to: signaling, a message, information, a packet, or the like received and sent by the network element. The user data information further includes the KPI of the user.

For example, the KPI of the user includes but is not limited to: a rate, a quantity of scheduling times, a modulation and coding scheme (MCS), a dual-stream transmission ratio, an initial transmission bit error rate, a signal to interference plus noise ratio (SINR), channel quality information (CQI), a resource allocation success rate, an available resource, interference, a reference signal received power (RSRP), or the like.

Optionally, after obtaining the user data information, the network problem analysis apparatus may further standardize the information to obtain standardized user data information. For example, KPIs of different users may be in different units. The KPIs of these users are standardized to obtain KPIs in a same unit.

In this embodiment of this application, the network problem analysis apparatus obtains the network problem analysis result by comprehensively considering the network problem data information and the user data information. The network problem analysis result indicates an impact degree of the network problem on the user data information. The user data information includes the key performance indicator KPI of the user. Specifically, the network problem analysis result includes the confidence level of the KPI and/or the deterioration degree of the KPI. The confidence level of the KPI is the confidence level of the impact degree of the network problem on the KPI, and the deterioration degree of the KPI indicates the change degree of the KPI after the network problem occurs. The network problem analysis result indicates a quantified impact degree caused by the network problem, to improve accuracy of analyzing impact of the network problem.

With reference to the first aspect, in a possible implementation, the generating a network problem analysis result based on the network problem data information and the user data information includes:
determining, based on the network problem data information, an abnormal network element from the plurality of network elements included in the first network, where the abnormal network element is a network element affected by the network problem;
determining an abnormal user from a plurality of users served by the abnormal network element, where the abnormal user is a user who migrates in, migrates out of, and/or camps on the abnormal network element after the network problem occurs; and
generating the network problem analysis result based on a KPI of the abnormal user, where the KPI indicated by the network problem analysis result belongs to the abnormal user.

Specifically, the abnormal network element is determined from the plurality of network elements in the first network based on the network problem data information. In this embodiment of this application, a network element affected by the network problem in the first network is referred to as the abnormal network element. Specifically, abnormal network elements include: a network element on which the network problem occurs and a network element having a service association relationship with the network element on which the network problem occurs. For ease of description, the network element on which the network problem occurs is referred to as a first network element, and the network element having the service association relationship with the first network element is referred to as a second network element. The network problem analysis apparatus associates the network problem with the first network element based on the network problem data information.

Then, the abnormal user is determined from the users served by the abnormal network element. The abnormal user is greatly affected by the network problem. For example, within one hour after the network problem occurs, the user who migrates in, migrates out of, and camps on the network element serves as the abnormal user.

According to the foregoing method, calculation processing complexity is reduced, and accuracy of analyzing the network problem is improved.

With reference to the first aspect, in a possible implementation, the generating the network problem analysis result based on a KPI of the abnormal user includes:
determining an affected KPI of the abnormal user from the KPI of the abnormal user, where the affected KPI is a KPI affected by the network problem in a plurality of KPIs of the abnormal user; and
generating the network problem analysis result based on the affected KPI of the abnormal user, where the KPI indicated by the network problem analysis result is the affected KPI.

According to the foregoing method, after the abnormal user is determined, the KPI (namely, the affected KPI) affected by the network problem in the plurality of KPIs of the abnormal user is further determined. This further reduces calculation processing complexity, and improves accuracy of analyzing the network problem.

With reference to the first aspect, in a possible implementation, the determining, based on the network problem data information, an abnormal network element from the plurality of network elements included in the first network includes:
determining, based on the network problem data information, the abnormal network element from the plurality of network elements included in the first network; and
generating first network information, where the first network information indicates a network topology structure of the abnormal network element, and a network topology result indicates a service association relationship between the network elements.

According to the foregoing method, the abnormal network element is found in the first network based on the network problem data information, and then the first network information is generated, where the first network information indicates the network topology structure of the abnormal network element. Subsequently, the service association relationship between the abnormal network elements may be conveniently determined based on the first network information, to reduce calculation processing complexity and improve accuracy of analyzing the network problem.

With reference to the first aspect, in a possible implementation, the marking, based on the network problem data information, the abnormal network element from the plurality of network elements included in the first network includes:
obtaining network resource data information, where the network resource data information includes any one or more of the following information: configuration information of the first network or engineering parameter information of the first network;
generating second network information based on the network resource data information, where the second network information indicates a network topology structure of the first network; and
determining, based on the network problem data information, the abnormal network element from a plurality of network elements indicated by the second network information, where the plurality of network elements indicated by the second network information are the plurality of network elements included in the first network.

Specifically, the network problem analysis apparatus obtains the network resource data information. The network resource data information includes any one or more of the following information: the configuration information of the first network or the engineering parameter information of the first network. The second network information indicates the network topology structure of the first network. The network topology structure indicates the service association relationship between the network elements. For the service association relationship and a physical connection relationship, a network element A (where the network element A is a base station) and a network element B (where the network element B is a base station) in a wireless network are used as an example. There is a physical connection between the network element A and the network element B. In addition, the network element A and the network element B are configured as logical neighboring cells of each other. In this way, a service association relationship is established between the network element A and the network element B. A user (for example, a terminal) service may be handed over between the network element A and the network element B. The abnormal network element is determined, based on the network problem data information, from the plurality of network elements (namely, the plurality of network elements in the first network) indicated by the second network information. In this embodiment of this application, the network element affected by the network problem in the first network is referred to as the abnormal network element. Then, the first network information is generated based on the service association relationship between the abnormal network elements. The first network information indicates the network topology structure of the abnormal network element.

To further improve accuracy of analyzing the network problem, a plurality of network element sets (where the network element set includes the first network element and the second network element) generated based on the second network information are combined. For example, a network element set #1 and a network element set #2 include a same network element. A network problem that occurs on the network element set #1 may be different from a network problem that occurs on the network element set #2. Therefore, it means that the same network element included in the network element set #1 and the network element set #2 may be affected by two different network problems at a same time. To improve accuracy of analyzing the network problem, the network element set #1 and the network element set #2 are combined, a combined network element set is output, and a corresponding network topology subgraph is generated for subsequent processing.

With reference to the first aspect, in a possible implementation, the first network information indicates network topologies of the first network element and the second network element, the first network element is a network element on which the network problem occurs in the first network, and the second network element is a network element having a service association relationship with the first network element. Specifically, abnormal network elements include: a network element on which the network problem occurs and a network element having a service association relationship with the network element on which the network problem occurs. For ease of description, the network element on which the network problem occurs is referred to as the first network element, and the network element having the service association relationship with the first network element is referred to as the second network element. The network problem analysis apparatus associates the network problem with the first network element based on the network problem data information.

With reference to the first aspect, in a possible implementation, the determining, based on the network problem data information, the abnormal network element from a plurality of network elements indicated by the second network information includes:
determining at least one abnormal network element group from the first network element and the second network element based on service migration information of the first network element and service migration information of the second network element, where the service migration information indicates statistical characteristic information of in-migration, out-migration, and/or camping of the user served by the network element, where
the abnormal network element group includes at least two abnormal network elements, a service association relationship exists between the abnormal network elements included in the abnormal network element group, and a change of service migration information of the abnormal network element before and after the network problem occurs satisfies a first threshold; and
marking the service association relationship between the abnormal network elements as abnormal, and generating third network information based on the first network information, where the third network information indicates a topology structure of the abnormal network element group.

To improve accuracy of the network problem analysis result, the abnormal network element group may be further determined from the first network element and the second network element that are indicated by the first network information, and the abnormal network element group includes the at least two abnormal network elements. The change of service migration information of the abnormal network element before and after the network problem occurs satisfies the first threshold. In other words, an abnormal network element group that is greatly affected by the network problem is selected from the first network element and the second network element. According to the foregoing method, a network element that is significantly affected by the network problem may be selected from a large quantity of second network elements. The second network element and the first network element that are significantly affected by the network problem are analyzed together as abnormal network elements, to find abnormal users served by the abnormal network elements. This effectively reduces data processing complexity and a calculation difficulty, and improves accuracy of analyzing the network problem.

The service migration information of the first network element and the service migration information of the second network element are obtained. The service migration information indicates statistical characteristic information of a user that is served by a network element and who migrates in the network element, migrates out of the network element, and/or camps on the network element. The statistical characteristic information includes but is not limited to a total quantity, a proportion, an average value, a variance, and/or the like.

For example, if a network element on which the network problem occurs is a network element #A, one of network elements having a service association relationship with the network element #A is a network element #B. Statistics on a total quantity of users who migrate from the network element #A to the network element #B within one hour before the network problem occurs may be collected. Statistics on the total quantity of users who migrate in the network element are collected every 10 minutes, and total quantities are specifically 100, 99, 98, 102, 103, and 95. Within 10 minutes after the network problem occurs, statistics on a total quantity of users who migrate in the network element are collected every 10 minutes, and the total quantity is 25. Based on statistical characteristic information #1 "100, 99, 98, 102, 103, and 95" and statistical characteristic information #2 "25", a hypothesis testing method is used to determine whether the statistical characteristic information #1 and the statistical characteristic information #2 change significantly. Based on calculation by using a hypothesis testing method, an obtained probability that the total quantity of users who migrate in the network element after the network problem occurs and the quantity of users who migrate in the network element within one hour before the network problem occurs do not change significantly is 0.04. However, a preset first threshold is 0.1, which indicates that there is a significant change. The service association relationship between the network element #A and the network element #B is an abnormal service association relationship.

With reference to the first aspect, in a possible implementation, the determining an affected KPI of the abnormal user from the KPI of the abnormal user includes:
determining, based on the third network information, the abnormal user served by the abnormal network element; and
determining the affected KPI from the KPI of the abnormal user based on a confidence level of the KPI of the abnormal user, where a confidence level of the affected KPI is greater than a second threshold.

Specifically, at least one KPI of the abnormal user is determined, based on the third network information and the user data information, from the user data information of the abnormal user served by the abnormal network group (an abnormal network element included in the abnormal network element group). The KPI may be a standardized KPI. Specifically, obtaining a KPI value of the abnormal user includes: obtaining a KPI value (KPIbefore) before the network problem occurs and a KPI value (KPIafter) after the network problem occurs.

For example, the KPI is an RSRP, and RSRP value intervals are classified into four parts, which are respectively -130 decibels relative to one milliwatt (decibel relative to one milliwatt, dBm) to -120 dBm, -120 dBm to -110 dBm, -110 dBm to -100 dBm, and -100 dBm to 90 dBm. 100 RSRP values are collected within five minutes before the network problem occurs. Proportions of the RSRP values in the four intervals are 10%, 30%, 40%, and 20%. A proportion of KPIbefore is *f*(*KPI_{before}*). *f*(*KPI_{before}*) is used as distribution of KPIbefore (in other words, probability distribution of KPIbefore). 100 RSRP values are collected within five minutes after the network problem occurs. Proportions of the RSRP values in the four intervals are 20%, 40%, 30%, and 10%. A proportion of KPIafter is *f*(*KPI_{after}*)*. f*(*KPI_{after}*) is used as distribution of KPIafter (in other words, probability distribution of KPIafter). A degree of a difference between the distribution of the two KPIs is calculated based on the distribution of KPIbefore and the distribution of KPIafter. A method for calculating the difference degree is, for example, JS divergence (where a value range is [0,1]). Smaller JS divergence indicates a smaller difference. Larger JS divergence indicates a larger difference.

For example, the second threshold is 0.75. The KPI of the abnormal user includes: a rate, a quantity of scheduling times, a modulation and coding scheme (MCS), a dual-stream transmission ratio, an initial transmission bit error rate, a signal to interference plus noise ratio (SINR), channel quality information (CQI), a resource allocation success rate, an available resource, interference, and a reference signal received power (RSRP). If confidence levels of the rate, the MCS, the SINR, the CQI, and the RSRP are greater than 0.75, the rate, the MCS, the SINR, the CQI, and the RSRP are considered to be affected KPIs. Then, a deterioration degree of the affected KPI is calculated based on a statistical amount of the affected KPI that exists before the network problem occurs and a statistical amount of the affected KPI that exists after the network problem occurs.

According to the foregoing method, a quantized network problem analysis result is output, so that the network problem analysis result is more intuitive, and accuracy of analyzing the network problem is improved.

With reference to the first aspect, in a possible implementation, the generating the network problem analysis result based on the affected KPI of the abnormal user includes:
generating fourth network information based on a communication mechanism relationship and the affected KPI of the abnormal user, where the fourth network information indicates an impact relationship between the affected KPI and the network problem, the impact relationship indicated by the fourth network information is consistent with an impact relationship indicated by the communication mechanism relationship, and the communication mechanism relationship indicates an impact relationship between the plurality of KPIs and the network problem; and
generating the network problem analysis result based on the fourth network information and the network problem.

The communication mechanism relationship may also be referred to as a communication mechanism relationship diagram. The communication mechanism relationship diagram indicates an impact relationship between KPIs. The impact relationship indicated by the communication mechanism relationship diagram complies with an impact mechanism described in a communication protocol. For example, a communication network engineer may predefine the communication mechanism relationship diagram. The communication mechanism relationship diagram describes impact of different types of network problems on the KPIs and a causal sequence of impact between different KPIs.

With reference to the first aspect, in a possible implementation, the fourth network information further includes a deterioration degree of a key KPI and the confidence level of the affected KPI, and the key KPI belongs to the affected KPI. In this way, the network problem analysis result more accurately reflects the impact of the network problem on the KPI.

With reference to the first aspect, in a possible implementation, the network problem analysis result includes any one or more of the following:
the network problem, the abnormal network element on which the network problem occurs, the abnormal user affected by the network problem, the affected KPI of the abnormal user, the confidence level of the affected KPI, or a deterioration degree of the affected KPI, where the confidence level of the affected KPI is a confidence level of impact of the network problem on the affected KPI, and the deterioration degree of the affected KPI indicates a change degree of the affected KPI after the network problem occurs.

With reference to the first aspect, in a possible implementation, the deterioration degree of the KPI includes any one or more of the following:
a difference between a statistical amount of the KPI after the network problem occurs and a statistical amount of the KPI before the network problem occurs;
a ratio of a statistical amount of the KPI after the network problem occurs to a statistical amount of the KPI before the network problem occurs;
a difference between a statistical amount of the KPI after the network problem occurs and a third threshold; or
a ratio of a statistical amount of the KPI after the network problem occurs to a third threshold.

With reference to the first aspect, in a possible implementation, the statistical amount includes any one or more of the following:
an average value, a median, a lower quantile, an upper quantile, or cumulative probability distribution in any interval.

With reference to the first aspect, in a possible implementation, the network problem data information includes any one or more of the following information:
alarm information of the network element, performance deterioration information of the network element, or change information of the network element.

According to a second aspect, an embodiment of this application provides a network problem analysis apparatus. The network problem analysis apparatus is used in a first network. The first network includes a plurality of network elements. The network problem analysis apparatus includes:
a transceiver module, configured to obtain network problem data information, where the network problem data information indicates a network problem that occurs on the network element in the first network, where
the transceiver module is further configured to obtain user data information, where the user data information is user data information of at least one user served by the first network, and the user data information includes a key performance indicator KPI of the user; and
a processing module, configured to generate a network problem analysis result based on the network problem data information and the user data information, where the network problem analysis result indicates an impact degree of the network problem on the KPI, and
the network problem analysis result includes:
   a confidence level of the KPI and/or a deterioration degree of the KPI, where the confidence level of the KPI is a confidence level of impact of the network problem on the KPI, and the deterioration degree of the KPI indicates a change degree of the KPI after the network problem occurs.

In a possible implementation, the processing module is further configured to determine, based on the network problem data information, an abnormal network element from the plurality of network elements included in the first network, where the abnormal network element is a network element affected by the network problem. The processing module is further configured to determine an abnormal user from a plurality of users served by the abnormal network element, where the abnormal user is a user who migrates in, migrates out of, and/or camps on the abnormal network element after the network problem occurs. The processing module is further configured to generate the network problem analysis result based on a KPI of the abnormal user, where the KPI indicated by the network problem analysis result belongs to the abnormal user.

In a possible implementation, the processing module is further configured to determine an affected KPI of the abnormal user from the KPI of the abnormal user, where the affected KPI is a KPI affected by the network problem in a plurality of KPIs of the abnormal user. The processing module is further configured to generate the network problem analysis result based on the affected KPI of the abnormal user, where the KPI indicated by the network problem analysis result is the affected KPI.

In a possible implementation, the processing module is further configured to determine, based on the network problem data information, the abnormal network element from the plurality of network elements included in the first network. The processing module is further configured to generate first network information, where the first network information indicates a network topology structure of the abnormal network element, and a network topology result indicates a service association relationship between the network elements.

In a possible implementation, the transceiver module is further configured to obtain network resource data information, where the network resource data information includes any one or more of the following information: configuration information of the first network or engineering parameter information of the first network. The processing module is further configured to generate second network information based on the network resource data information, where the second network information indicates a network topology structure of the first network. The processing module is further configured to determine, based on the network problem data information, the abnormal network element from a plurality of network elements indicated by the second network information, where the plurality of network elements indicated by the second network information are the plurality of network elements included in the first network.

In a possible implementation, the first network information indicates network topologies of a first network element and a second network element, the first network element is a network element on which the network problem occurs in the first network, and the second network element is a network element having a service association relationship with the first network element.

In a possible implementation, the processing module is further configured to determine at least one abnormal network element group from the first network element and the second network element based on service migration information of the first network element and service migration information of the second network element, where the service migration information indicates statistical characteristic information of in-migration, out-migration, and/or camping of the user served by the network element. The abnormal network element group includes at least two abnormal network elements, a service association relationship exists between the abnormal network elements included in the abnormal network element group, and a change of service migration information of the abnormal network element before and after the network problem occurs satisfies a first threshold. The processing module is further configured to: mark the service association relationship between the abnormal network elements as abnormal, and generate third network information based on the first network information, where the third network information indicates a topology structure of the abnormal network element group.

In a possible implementation, the processing module is further configured to determine, based on the third network information, the abnormal user served by the abnormal network element. The processing module is further configured to determine the affected KPI from the KPI of the abnormal user based on a confidence level of the KPI of the abnormal user, where a confidence level of the affected KPI is greater than a second threshold.

In a possible implementation, the processing module is further configured to generate fourth network information based on a communication mechanism relationship and the affected KPI of the abnormal user, where the fourth network information indicates an impact relationship between the affected KPI and the network problem, the impact relationship indicated by the fourth network information is consistent with an impact relationship indicated by the communication mechanism relationship, and the communication mechanism relationship indicates an impact relationship between the plurality of KPIs and the network problem. The processing module is further configured to generate the network problem analysis result based on the fourth network information and the network problem.

In a possible implementation, the fourth network information further includes a deterioration degree of a key KPI and the confidence level of the affected KPI, and the key KPI belongs to the affected KPI.

In a possible implementation, the network problem analysis result includes any one or more of the following:
the network problem, the abnormal network element on which the network problem occurs, the abnormal user affected by the network problem, the affected KPI of the abnormal user, the confidence level of the affected KPI, or a deterioration degree of the affected KPI, where the confidence level of the affected KPI is a confidence level of impact of the network problem on the affected KPI, and the deterioration degree of the affected KPI indicates a change degree of the affected KPI after the network problem occurs.

In a possible implementation, the deterioration degree of the KPI includes any one or more of the following:
a difference between a statistical amount of the KPI after the network problem occurs and a statistical amount of the KPI before the network problem occurs;
a ratio of a statistical amount of the KPI after the network problem occurs to a statistical amount of the KPI before the network problem occurs;
a difference between a statistical amount of the KPI after the network problem occurs and a third threshold; or
a ratio of a statistical amount of the KPI after the network problem occurs to a third threshold.

In a possible implementation, the statistical amount includes any one or more of the following:
an average value, a median, a lower quantile, an upper quantile, or cumulative probability distribution in any interval.

In a possible implementation, the network problem data information includes any one or more of the following information:
alarm information of the network element, performance deterioration information of the network element, or change information of the network element.

According to a third aspect, an embodiment of this application provides a computing device. The computing device is used in a first network. The first network includes a plurality of network elements. The computing device includes a communication interface and a processor.

The communication interface is configured to obtain network problem data information, where the network problem data information indicates a network problem that occurs on the network element in the first network.

The communication interface is further configured to obtain user data information, where the user data information is user data information of at least one user served by the first network, and the user data information includes a key performance indicator KPI of the user.

The processor is configured to generate a network problem analysis result based on the network problem data information and the user data information, where the network problem analysis result indicates an impact degree of the network problem on the KPI.

The network problem analysis result includes:
a confidence level of the KPI and/or a deterioration degree of the KPI, where the confidence level of the KPI is a confidence level of impact of the network problem on the KPI, and the deterioration degree of the KPI indicates a change degree of the KPI after the network problem occurs.

In a possible implementation, the processor is further configured to determine, based on the network problem data information, an abnormal network element from the plurality of network elements included in the first network, where the abnormal network element is a network element affected by the network problem. The processor is further configured to determine an abnormal user from a plurality of users served by the abnormal network element, where the abnormal user is a user who migrates in, migrates out of, and/or camps on the abnormal network element after the network problem occurs. The processor is further configured to generate the network problem analysis result based on a KPI of the abnormal user, where the KPI indicated by the network problem analysis result belongs to the abnormal user.

In a possible implementation, the processor is further configured to determine an affected KPI of the abnormal user from the KPI of the abnormal user, where the affected KPI is a KPI affected by the network problem in a plurality of KPIs of the abnormal user. The processor is further configured to generate the network problem analysis result based on the affected KPI of the abnormal user, where the KPI indicated by the network problem analysis result is the affected KPI.

In a possible implementation, the processor is further configured to determine, based on the network problem data information, the abnormal network element from the plurality of network elements included in the first network. The processor is further configured to generate first network information, where the first network information indicates a network topology structure of the abnormal network element, and a network topology result indicates a service association relationship between the network elements.

In a possible implementation, the communication interface is further configured to obtain network resource data information, where the network resource data information includes any one or more of the following information: configuration information of the first network or engineering parameter information of the first network. The processor is further configured to generate second network information based on the network resource data information, where the second network information indicates a network topology structure of the first network. The processor is further configured to determine, based on the network problem data information, the abnormal network element from a plurality of network elements indicated by the second network information, where the plurality of network elements indicated by the second network information are the plurality of network elements included in the first network.

In a possible implementation, the first network information indicates network topologies of a first network element and a second network element, the first network element is a network element on which the network problem occurs in the first network, and the second network element is a network element having a service association relationship with the first network element.

In a possible implementation, the processor is further configured to determine at least one abnormal network element group from the first network element and the second network element based on service migration information of the first network element and service migration information of the second network element, where the service migration information indicates statistical characteristic information of in-migration, out-migration, and/or camping of the user served by the network element. The abnormal network element group includes at least two abnormal network elements, a service association relationship exists between the abnormal network elements included in the abnormal network element group, and a change of service migration information of the abnormal network element before and after the network problem occurs satisfies a first threshold. The processor is further configured to: mark the service association relationship between the abnormal network elements as abnormal, and generate third network information based on the first network information, where the third network information indicates a topology structure of the abnormal network element group.

In a possible implementation, the processor is further configured to determine, based on the third network information, the abnormal user served by the abnormal network element. The processor is further configured to determine the affected KPI from the KPI of the abnormal user based on a confidence level of the KPI of the abnormal user, where a confidence level of the affected KPI is greater than a second threshold.

In a possible implementation, the processor is further configured to generate fourth network information based on a communication mechanism relationship and the affected KPI of the abnormal user, where the fourth network information indicates an impact relationship between the affected KPI and the network problem, the impact relationship indicated by the fourth network information is consistent with an impact relationship indicated by the communication mechanism relationship, and the communication mechanism relationship indicates an impact relationship between the plurality of KPIs and the network problem. The processor is further configured to generate the network problem analysis result based on the fourth network information and the network problem.

In a possible implementation, the fourth network information further includes a deterioration degree of a key KPI and the confidence level of the affected KPI, and the key KPI belongs to the affected KPI.

In a possible implementation, the network problem analysis result includes any one or more of the following:
the network problem, the abnormal network element on which the network problem occurs, the abnormal user affected by the network problem, the affected KPI of the abnormal user, the confidence level of the affected KPI, or a deterioration degree of the affected KPI, where the confidence level of the affected KPI is a confidence level of impact of the network problem on the affected KPI, and the deterioration degree of the affected KPI indicates a change degree of the affected KPI after the network problem occurs.

In a possible implementation, the deterioration degree of the KPI includes any one or more of the following:
a difference between a statistical amount of the KPI after the network problem occurs and a statistical amount of the KPI before the network problem occurs;
a ratio of a statistical amount of the KPI after the network problem occurs to a statistical amount of the KPI before the network problem occurs;
a difference between a statistical amount of the KPI after the network problem occurs and a third threshold; or
a ratio of a statistical amount of the KPI after the network problem occurs to a third threshold.

In a possible implementation, the statistical amount includes any one or more of the following:
an average value, a median, a lower quantile, an upper quantile, or cumulative probability distribution in any interval.

In a possible implementation, the network problem data information includes any one or more of the following information:
alarm information of the network element, performance deterioration information of the network element, or change information of the network element.

According to a fourth aspect, a computing device is provided. The computing device performs the method according to any one of the implementations of the first aspect.

According to a fifth aspect, a computing device cluster is provided. A cloud computing system includes the computing device according to the fourth aspect.

According to a sixth aspect, this application provides a computer storage medium. The computer storage medium may be non-volatile. The computer storage medium stores computer-readable instructions. When the computer-readable instructions are executed by a processor, the method according to any one of the implementations of the first aspect is implemented.

According to a seventh aspect, this application provides a computer program product including instructions. When the computer program product runs on a computer, the computer is enabled to perform the method according to any one of the implementations of the first aspect.

According to an eighth aspect, this application provides a chip system. The chip system includes a processor and an interface circuit, configured to support a network device in implementing functions in the foregoing aspects, for example, sending or processing data and/or information in the foregoing methods. In a possible design, the chip system further includes a memory. The memory is configured to store program instructions and data that are necessary for the network device. The chip system may include a chip, or may include a chip and another discrete component.

### BRIEF DESCRIPTION OF DRAWINGS

FIG. 1 is a diagram of an application scenario according to an embodiment of this application;
FIG. 2 is a diagram of a structure of a computing device 100 according to an embodiment of this application;
FIG. 3 is a diagram of a structure of a computing device cluster according to an embodiment of this application;
FIG. 4 is a diagram of a structure of a computing device cluster according to an embodiment of this application;
FIG. 5 is a diagram of an embodiment of a network problem analysis method according to an embodiment of this application;
FIG. 6 is a diagram of an embodiment of a network problem analysis method according to an embodiment of this application;
FIG. 7 is a diagram of an embodiment of a network problem analysis method according to an embodiment of this application;
FIG. 8 is a diagram of an embodiment of a network problem analysis method according to an embodiment of this application;
FIG. 9 is a schematic of a network topology structure of a first network according to an embodiment of this application;
FIG. 10 is a schematic of a network topology structure of first network information according to an embodiment of this application;
FIG. 11 is a diagram of another embodiment of first network information according to an embodiment of this application;
FIG. 12 is a schematic of a network topology of third network information according to an embodiment of this application;
FIG. 13 is a diagram of a structure of a communication mechanism relationship diagram according to an embodiment of this application;
FIG. 14 is a schematic of a topology of fourth network information according to an embodiment of this application;
FIG. 15 is a diagram of a structure of a possible computing device 1500 according to an embodiment of this application; and
FIG. 16 is a diagram of a structure of a computing device 1600 according to an embodiment of this application.

### DESCRIPTION OF EMBODIMENTS

Some example implementations of the present disclosure will be described in more detail in the following with reference to the accompanying drawings. Although some example implementations of the present disclosure are shown in the accompanying drawings, it should be understood that the present disclosure may be implemented in various forms and should not be limited by the example implementations described herein. Instead, these implementations are provided to make the present disclosure more thorough and complete and to fully convey the scope of the present disclosure to a person skilled in the art.

The term "include" and variants thereof used in this specification indicate open inclusion, that is, "include but is not limited to". Unless otherwise stated, the term "or" means "and/or". The term "based on" means "at least partially based on". The terms "embodiments" and "some embodiments" indicate "at least some embodiments". The terms "first", "second", and the like are described to distinguish between different objects and the like, do not represent a sequence, and do not impose a limitation that "first" and "second" are different types.

First, some concepts in embodiments of this application are described.

Autonomous network (Autonomous Network): The autonomous network is a new generation telecommunication network that can implement self-configuration, self-healing, self-optimization, and self-evolution.

Network element (Network Element): The network element is a minimum unit that can be monitored and managed in network management.

Co-existence analysis (Co-existence Analysis): The co-existence analysis is an analysis method that quantifies co-existence information in various information carriers, and may disclose an implied co-existence relationship between a content association of information and a feature item.

Network topology (Network Topology): The network topology is a specific connection structure between network elements that form a network. A node of the topology is a network element, and an edge is a service association relationship between the network elements, where the service association relationship may be physical or logical.

Directed graph (Directed Graph): The directed graph is 2-tuple G=(V, E). An element in a set V is referred to as a node, and an element in a set E is an unordered pair including two nodes, and is referred to as an edge. A graph whose edges are directional is referred to as the directed graph.

Connected path (Connected Graph): For any two nodes in a graph, if a sequence of alternating nodes and edges exists, the sequence is referred to as a connected path between the two nodes.

Hypothesis testing (Hypothesis Testing): The hypothesis testing is a statistical inference method used to determine whether a difference between samples or between a sample and a population is caused by a sampling error or an essential difference. When a significant level of the testing is lower than a preset threshold, a hypothesis is satisfied. When a significant level of the testing is not lower than a preset threshold, a hypothesis is not satisfied. A value range of the significant level is (0, 1), and is generally set to 0.1, 0.05, or 0.01.

Probability distribution (Probability Distribution): The probability distribution indicates a probability rule of a random variable value.

Distribution similarity (Distribution Similarity): The distribution similarity is a similarity between two types of probability distribution. Common measurement methods include a cosine similarity, KL divergence, an earth mover distance, and the like.

Graph search (Graph Search) method: The graph search method is a method of finding all paths from a start node to a target node by traversing a graph. Common search methods include depth-first search, breadth-first search, and the like.

Cumulative probability distribution (Cumulative Probability Distribution): The cumulative probability distribution indicates a probability that a random variable falls in any interval. The cumulative probability distribution may be obtained by integrating the probability distribution.

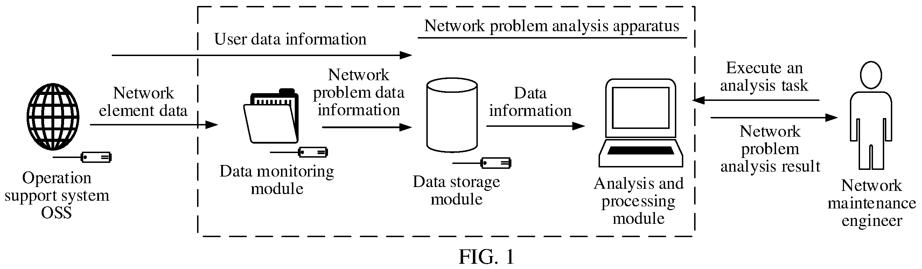

For example, FIG. 1 is a diagram of an application scenario according to an embodiment of this application. An operation support system (Operation Support System, OSS) is also referred to as an operation support system, and is a necessary support platform for developing and operating a telecommunication service. The OSS is a system for supporting integration and information resource sharing of telecommunication operators, and mainly includes network management, system management, charging, business, accounting, customer services, and the like. Systems are organically integrated through a unified information bus. The operation support system includes an operation and maintenance center and a network management center. The operation support system is responsible for checking and managing communication quality and running of an entire network, and recording and collecting data during running of the entire network. The operation support system has connection lines between devices in the entire network and performs functions of monitoring and controlling the devices.

A network problem analysis apparatus provided in embodiments of this application may be divided into a data monitoring module, a data storage module, and an analysis and processing module based on functions. Details are as follows: The data monitoring module may collect network element data generated in real time during running of the OSS system. The data monitoring module monitors the network element data of the OSS system in real time, and uploads network problem data information obtained based on the network element data to the data storage module for storage. The data storage module is further configured to store user data information of a user served by the OSS system. The user data information includes a key performance indicator (Key Performance Index, KPI) of the user. After extracting the network problem data information and the user data information from the data storage module, the analysis and processing module standardizes the information. Standardization processing refers to preprocessing the network problem data information and the user data information into a standardized format for subsequent analysis and processing. The analysis and processing module obtains and generates a network problem analysis result based on the network problem data information and the user data information, where the network problem analysis result indicates an impact degree of a network problem on the KPI. Finally, the network problem analysis apparatus feeds back the network problem analysis result to a network maintenance engineer, and the network maintenance engineer processes a network running in the OSS system. For example, the network maintenance engineer sorts network problems based on the network problem analysis result, creates work orders, and uploads the work orders to a work order management server. The work order management server dispatches the plurality of work orders to the network maintenance engineer based on priorities.

The analysis and processing module, the data storage module, and the data monitoring module in the network problem analysis apparatus may all be implemented by using software, or may all be implemented by using hardware. For example, the following describes an implementation of the analysis and processing module by using the analysis and processing module as an example. Similarly, for implementations of the data storage module and the data monitoring module, refer to the implementation of the analysis and processing module.

The module is used as an example of a software functional unit, and the analysis and processing module may include code running on a computing instance. The computing instance may include at least one of a physical host (computing device), a virtual machine, and a container. Further, there may be one or more computing instances. For example, the analysis and processing module may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the analysis and processing module may include at least one computing device such as a server. Alternatively, the analysis and processing module may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of computing devices included in the analysis and processing module may be distributed in a same region, or may be distributed in different regions. The plurality of computing devices included in the analysis and processing module may be distributed in a same AZ, or may be distributed in different AZs. Similarly, the plurality of computing devices included in the analysis and processing module may be distributed in a same VPC, or may be distributed in a plurality of VPCs. The plurality of computing devices may be any combination of computing devices such as the server, the ASIC, the PLD, the CPLD, the FPGA, and the GAL.

The network problem analysis apparatus may be implemented by using software, or may be implemented by using hardware. For example, the following describes an implementation of the network problem analysis apparatus.

The module is used as an example of a software functional unit, and the network problem analysis apparatus may include code running on a computing instance. The computing instance may be at least one of computing devices such as a physical host (computing device), a virtual machine, and a container. Further, there may be one or more computing devices. For example, the network problem analysis apparatus may include code running on a plurality of hosts/virtual machines/containers. It should be noted that the plurality of hosts/virtual machines/containers used to run an application may be distributed in a same region, or may be distributed in different regions. The plurality of hosts/virtual machines/containers used to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same VPC, or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the network problem analysis apparatus may include at least one computing device such as a server. Alternatively, the network problem analysis apparatus may be a device implemented by using an ASIC, a PLD, or the like. The PLD may be implemented by a CPLD, an FPGA, GAL, or any combination thereof.

A plurality of computing devices included in the network problem analysis apparatus may be distributed in a same region, or may be distributed in different regions. The plurality of computing devices included in the network problem analysis apparatus may be distributed in a same AZ, or may be distributed in different AZs. Similarly, the plurality of computing devices included in the network problem analysis apparatus may be distributed in a same VPC, or may be distributed in a plurality of VPCs. The plurality of computing devices may be any combination of computing devices such as the server, the ASIC, the PLD, the CPLD, the FPGA, and the GAL.

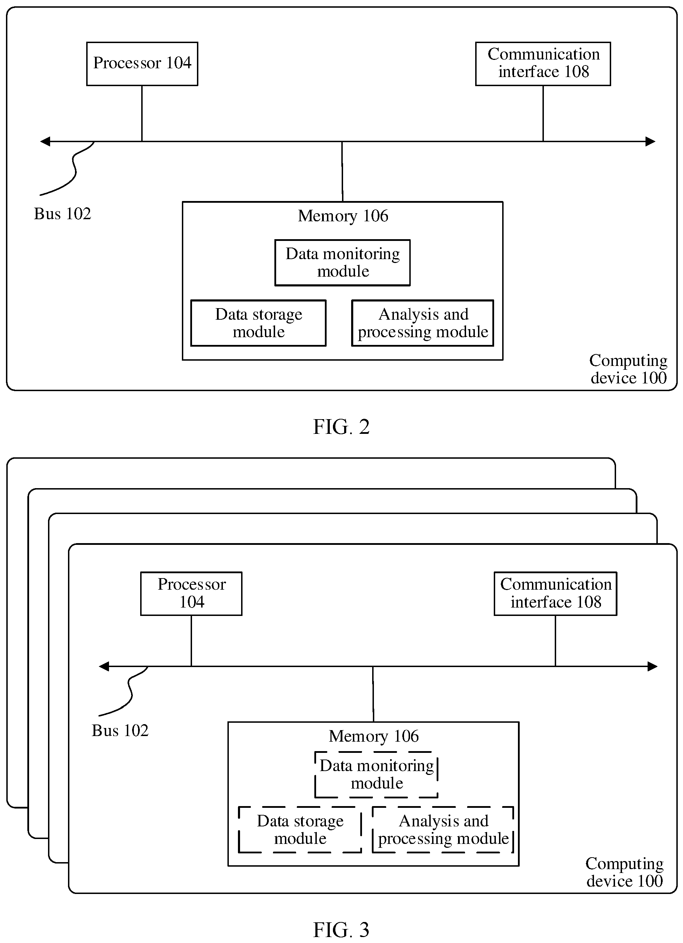

This application further provides a computing device 100. As shown in FIG. 2, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that a quantity of processors and a quantity of memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 2, but this does not mean that there is only one bus or one type of bus. The bus 104 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement functions of the foregoing analysis and processing module, data storage module, and data monitoring module, to implement a network problem analysis method. In other words, the memory 106 stores instructions used to perform the network problem analysis method.

Alternatively, the memory 106 stores executable code, and the processor 104 executes the executable code to separately implement functions of the foregoing network problem analysis apparatus, to implement a network problem analysis method. In other words, the memory 106 stores instructions used to perform the network problem analysis method.

The communication interface 103 implements communication between the computing device 100 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 3, the computing device cluster includes at least one computing device 100. Memories 106 in one or more computing devices 100 in the computing device cluster may store same instructions used to perform a network problem analysis method.

In some possible implementations, memories 106 in one or more computing devices 100 in the computing device cluster may alternatively separately store some instructions used to perform a network problem analysis method. In other words, a combination of the one or more computing devices 100 may jointly execute the instructions used to perform the network problem analysis method.

It should be noted that memories 106 in different computing devices 100 in the computing device cluster may store different instructions, which are respectively used to perform some functions of a network problem analysis apparatus. In other words, the instructions stored in the memories 106 in the different computing devices 100 may implement functions of one or more of an analysis and processing module, a data storage module, and a data monitoring module.

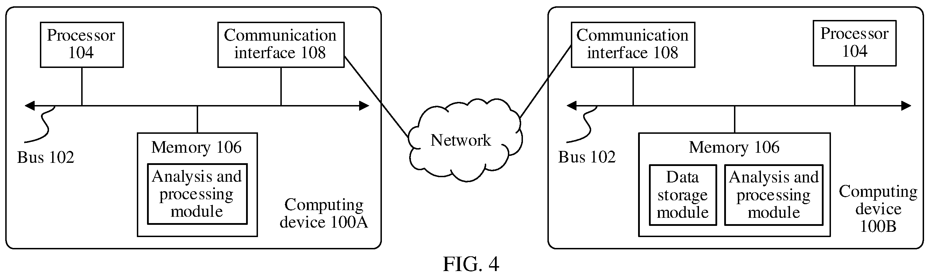

In some possible implementations, one or more computing devices in the computing device cluster may be connected through a network. The network may be a wide area network, a local area network, or the like. FIG. 4 shows a possible implementation. As shown in FIG. 4, two computing devices 100A and 100B are connected through a network. Specifically, each computing device is connected to the network through a communication interface of the computing device. In this possible implementation, a memory 106 in the computing device 100A stores instructions for performing the function of the analysis and processing module. In addition, a memory 106 in the computing device 100B stores instructions for performing the functions of the data storage module and the data monitoring module.

A connection manner of a computing device cluster shown in FIG. 4 may be based on a consideration that the network problem analysis method provided in this application needs a large amount of data information. Therefore, it is considered that the functions implemented by the data storage module and the data monitoring module are performed by the computing device 100B.

It should be understood that a function of the computing device 100A shown in FIG. 4 may alternatively be completed by a plurality of computing devices 100. Similarly, a function of the computing device 100B may alternatively be completed by a plurality of computing devices 100.

An embodiment of this application further provides another computing device cluster. For a connection relationship between computing devices in the computing device cluster, refer to the connection manner of the computing device cluster in FIG. 3 and FIG. 4. A difference lies in that memories 106 in one or more computing devices 100 in the computing device cluster may store same instructions used to perform a network problem analysis method.

In some possible implementations, memories 106 in one or more computing devices 100 in the computing device cluster may alternatively separately store some instructions used to perform a network problem analysis method. In other words, a combination of the one or more computing devices 100 may jointly execute the instructions used to perform the network problem analysis method.

It should be noted that memories 106 in different computing devices 100 in the computing device cluster may store different instructions, which are used to perform some functions of a network problem analysis system. In other words, the instructions stored in the memories 106 in the different computing devices 100 may implement functions of one or more apparatuses in the network problem analysis apparatus.

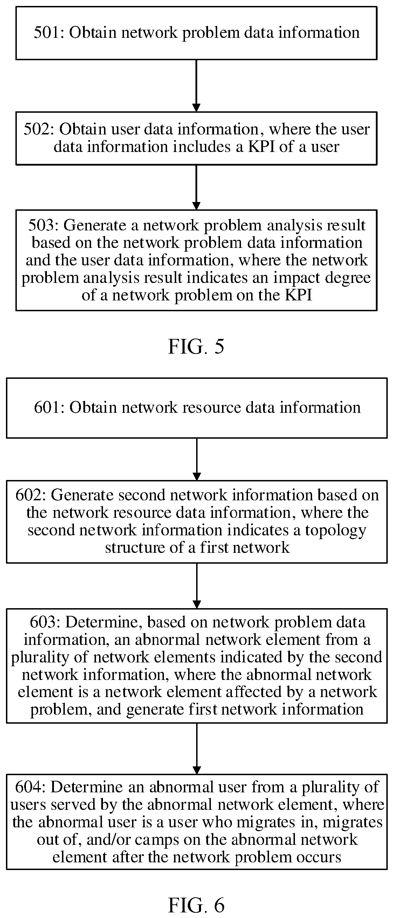

The following describes embodiments of this application with reference to the accompanying drawings. FIG. 5 is a diagram of an embodiment of a network problem analysis method according to an embodiment of this application. The network problem analysis method provided in this embodiment of this application includes the following steps.

501: Obtain network problem data information.

In step 501, a network problem analysis apparatus obtains the network problem data information of a network element in a first network. Specifically, the network problem data information includes but is not limited to: alarm information of the network element, performance deterioration information of the network element, and change information of the network element.

For example, the alarm information of the network element includes the following. When the network element is a cell, the alarm information of the network element may be alarm information indicating that the cell is unavailable, the cell is considered as a logical network element, a network device may include (or manage) one or more cells, and the network device provides a wireless communication service for a user (for example, a terminal device) by using the cell managed by the network device; when the network element is a network device such as a radio frequency unit, the alarm information of the network element may be link interruption information of the network device; or when the network element is a network device such as a site, the alarm information of the network element may be out-of-service alarm information of the network device.

For example, the performance deterioration information of the network element includes that a connection establishment failure rate is greater than a preset threshold, or load of a device is greater than a preset threshold.

For example, the change information of the network element includes that configuration information of a neighboring cell changes, or a carrier is newly added.

Optionally, after obtaining the network problem data information, the network problem analysis apparatus may further standardize the information to obtain standardized network problem data information. For example, the standardized network problem data information includes: a network problem identifier, a network problem type, and a location at which a network problem occurs (in other words, identification information of a network element on which the network problem occurs). An example is shown in Table 1.

**Table 1**

| Network problem identifier | Network problem type | Location at which the network problem occurs (network element identifier-cell identifier) |
|---|---|---|
| 26529 | Radio frequency unit voltage standing wave ratio threshold crossed (RF unit VSWR threshold crossed) | 108187-33 and 108187-35 |
| 26530 | Radio frequency unit voltage standing wave ratio threshold crossed (RF unit VSWR threshold crossed) | 213193-23 and 213193-27 |
| 26531 | Cell unavailable (cell unavailable) | 204665-35 |
| 26532 | Cell unavailable (cell unavailable) | 204665-37 |
| 26533 | Radio frequency unit maintenance link failure (RF unit maintenance link failure) | 204665-35 and 204665-36 |
| 26535 | Baseband processing unit common public radio interface error (BBU CPRI interface error) | 204665-32 |

502: Obtain user data information, where the user data information includes a KPI of a user.

In step 502, the network problem analysis apparatus obtains the user data information. The user data information is user data information of each user served by a network element in the first network. For example, the user data information includes but is not limited to: signaling, a message, information, a packet, or the like received and sent by the network element. The user data information further includes the KPI of the user.

For example, the KPI of the user includes but is not limited to: a rate, a quantity of scheduling times, a modulation and coding scheme (MCS), a dual-stream transmission ratio, an initial transmission bit error rate, a signal to interference plus noise ratio (SINR), channel quality information (CQI), a resource allocation success rate, an available resource, interference, a reference signal received power (RSRP), or the like.

Optionally, after obtaining the user data information, the network problem analysis apparatus may further standardize the information to obtain standardized user data information. For example, KPIs of different users may be in different units. The KPIs of these users are standardized to obtain KPIs in a same unit.

503: Generate a network problem analysis result based on the network problem data information and the user data information, where the network problem analysis result indicates an impact degree of the network problem on the KPI.

In step 503, an abnormal network element and an abnormal user served by the abnormal network element are separately determined based on the network problem data information and the user data information. Then, the network problem analysis result is determined based on user data information (a KPI) of the abnormal user, where the network problem analysis result indicates an impact degree of the network problem on an affected KPI in the user data information of the abnormal user. Specifically, the network problem analysis result includes: a confidence level of the KPI, and/or a deterioration degree of the KPI. The confidence level of the KPI is a confidence level of impact of the network problem on the KPI. The deterioration degree of the KPI indicates a change degree of the KPI after the network problem occurs.

Further, a key KPI may be selected from a plurality of KPIs of the user. For example, the KPIs of the user include: a rate, a quantity of scheduling times, a modulation and coding scheme (MCS), a dual-stream transmission ratio, an initial transmission bit error rate, a signal to interference plus noise ratio (SINR), channel quality information (CQI), a resource allocation success rate, an available resource, interference, and a reference signal received power (RSRP). The RSRP and the rate are selected as key KPIs. The network problem analysis result includes a confidence level of the key KPI and a deterioration degree of the key KPI.

The deterioration degree of the KPI includes any one or more of the following: a difference between a statistical amount of the KPI after the network problem occurs and a statistical amount of the KPI before the network problem occurs; a ratio of a statistical amount of the KPI after the network problem occurs to a statistical amount of the KPI before the network problem occurs; a difference between a statistical amount of the KPI after the network problem occurs and a third threshold; or a ratio of a statistical amount of the KPI after the network problem occurs to a third threshold.

For the statistical amount, the statistical amount includes any one or more of the following: an average value, a median, a lower quantile, an upper quantile, or cumulative probability distribution in any interval.

It should be noted that a method for calculating the confidence level of the KPI and a method for calculating the deterioration degree of the KPI are not limited in this embodiment of this application.

In an example, the method for calculating the confidence level of the KPI includes: collecting statistics on data of the KPI before the network problem occurs, where the data is denoted as KPIbefore; and collecting statistics on data of the KPI after the network problem occurs, where the data is denoted as KPIafter. Then, probability distribution of KPIbefore and probability distribution of KPIafter are calculated. Finally, a distribution similarity measurement method is used to calculate a degree of a difference between the probability distribution before and after the network problem occurs. The difference degree is used as the confidence level of the KPI.

In an example, the method for calculating the deterioration degree of the KPI includes: calculating cumulative probability distribution of KPIbefore in an interval, where the cumulative probability distribution is denoted as S-KPIbefore; and calculating cumulative probability distribution of KPIafter in an interval, where the cumulative probability distribution is denoted as S-KPIafter. Then, a difference between S-KPIbefore and S-KPIafter is calculated, and the difference is used as the deterioration degree of the KPI. A statistical amount of the KPI is cumulative probability distribution in an interval, and is sensitive to local deterioration.

In this embodiment of this application, the network problem analysis apparatus obtains the network problem analysis result by comprehensively considering the network problem data information and the user data information. The network problem analysis result indicates an impact degree of the network problem on the user data information. The user data information includes the key performance indicator KPI of the user. Specifically, the network problem analysis result includes the confidence level of the KPI and/or the deterioration degree of the KPI. The confidence level of the KPI is the confidence level of the impact degree of the network problem on the KPI, and the deterioration degree of the KPI indicates the change degree of the KPI after the network problem occurs. The network problem analysis result indicates a quantified impact degree caused by the network problem, to improve accuracy of analyzing impact of the network problem.

With reference to the foregoing embodiment, to further improve accuracy of the network problem analysis result, in step 503 (generating the network problem analysis result based on the network problem data information and the user data information), the abnormal network element affected by the network problem in the first network may be further determined. Then, the abnormal user is determined from users served by the abnormal network element. The KPI (referred to as the affected KPI) affected by the network problem is determined from the user data information (KPI) of the abnormal user. Finally, the network problem analysis result is generated based on the affected KPI that exists before the network problem occurs and the KPI that exists after the network problem occurs. The network problem analysis result indicates the impact degree of the network problem on the affected KPI. Descriptions are separately provided in the following.

First, how to determine the abnormal network element is described. FIG. 6 is a diagram of an embodiment of a network problem analysis method according to an embodiment of this application. The network problem analysis method provided in this embodiment of this application further includes the following steps.

601: Obtain network resource data information.

In step 601, a network problem analysis apparatus obtains the network resource data information. The network resource data information includes any one or more of the following information: configuration information of a first network or engineering parameter information of the first network.

For example, a network element is a base station (an eNodeB), and the network resource data information is shown in Table 2.

**Table 2**

| Base station name (eNodeB Name) | Base station identifier (eNodeB ID) | Local cell identity (localCell ID) | BBU information (BBU info) |
|---|---|---|---|
| AB1236_L | 351236 | 21 | 0-0-4-1 |
| AB1236_L | 351236 | 22 | 0-0-4-2 |
| AB1236_L | 351236 | 0 | 0-0-2 |
| AB1236_L | 351236 | 1 | 0-0-2 |

In another example, the network resource data information is shown in Table 3.

**Table 3**

| Site name | Site ID | Cell name | Cell ID | Sector ID | Frequ ency | Sending mode (TxMode ) | Ban dwid th | Azim uth angle | Longi tude | Latit ude |
|---|---|---|---|---|---|---|---|---|---|---|
| XXX | 6xxx98 | XX | 1 | 2 | 2460 | 4T4R | 10 | 120 | 90.0x XX | 40.x XX |

602: Generate second network information based on the network resource data information, where the second network information indicates a topology structure of the first network.

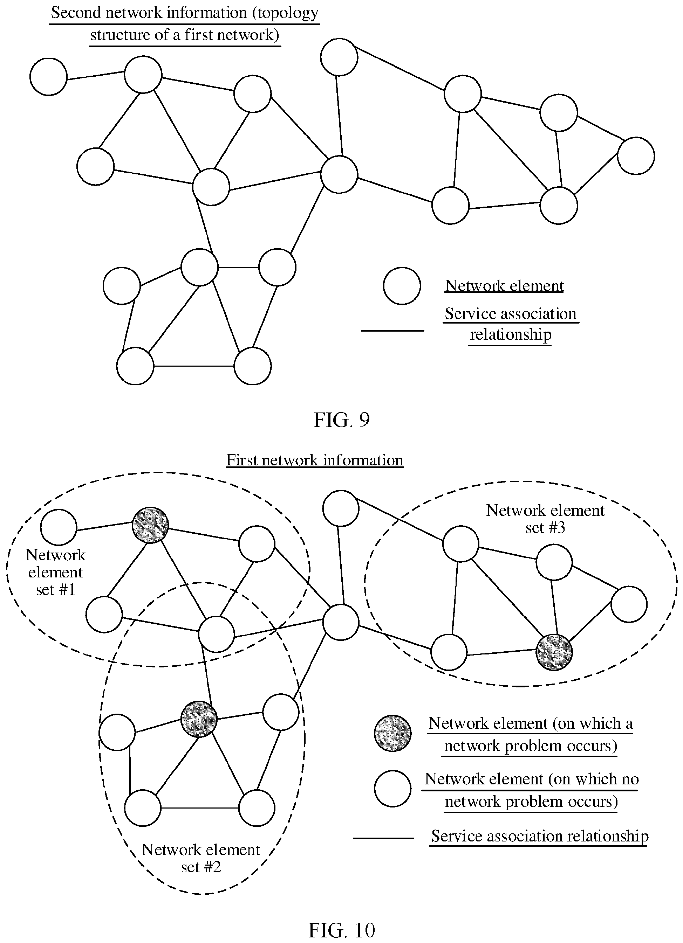

In step 602, the network resource data information indicates a service association relationship and/or a physical connection relationship between network elements. The second network information may be generated based on the network resource data information. The second network information indicates the topology structure of the first network. For example, FIG. 9 is a schematic of a network topology structure of the first network according to an embodiment of this application. The second network information is generated based on the network resource data information of the first network. The second network information indicates the network topology structure of the first network. The network topology structure indicates the service association relationship between the network elements.

For the service association relationship and the physical connection relationship, a network element A (where the network element A is a base station) and a network element B (where the network element B is a base station) in a wireless network are used as an example. There is a physical connection between the network element A and the network element B. In addition, the network element A and the network element B are configured as logical neighboring cells of each other. In this way, a service association relationship is established between the network element A and the network element B. A user (for example, a terminal) service may be handed over between the network element A and the network element B.

603: Determine, based on network problem data information, an abnormal network element from a plurality of network elements indicated by the second network information, where the abnormal network element is a network element affected by a network problem, and generate first network information.

In step 603, the abnormal network element is determined, based on the network problem data information, from the plurality of network elements (namely, a plurality of network elements in the first network) indicated by the second network information. In this embodiment of this application, a network element affected by the network problem in the first network is referred to as the abnormal network element. Specifically, abnormal network elements include: a network element on which the network problem occurs and a network element having a service association relationship with the network element on which the network problem occurs. For ease of description, the network element on which the network problem occurs is referred to as a first network element, and the network element having the service association relationship with the first network element is referred to as a second network element. The network problem analysis apparatus associates the network problem with the first network element based on the network problem data information.

Then, the first network information is generated based on the service association relationship between the first network element and the second network element. The first network information indicates a network topology structure of the abnormal network element. In other words, the first network information indicates a network topology of the first network element and a network topology of the second network element. In a possible implementation, the network problem analysis apparatus marks the first network element and the second network element in the second network information, and then generates the first network information. A first network element and a second network element having a service association relationship with the first network element is output as a network element set.

FIG. 10 is a schematic of a network topology structure of the first network information according to an embodiment of this application. A network element set #1 includes the network element (the first network element) on which the network problem occurs and another network element (the second network element) on which no network problem occurs and that has the service association relationship with the first network element.

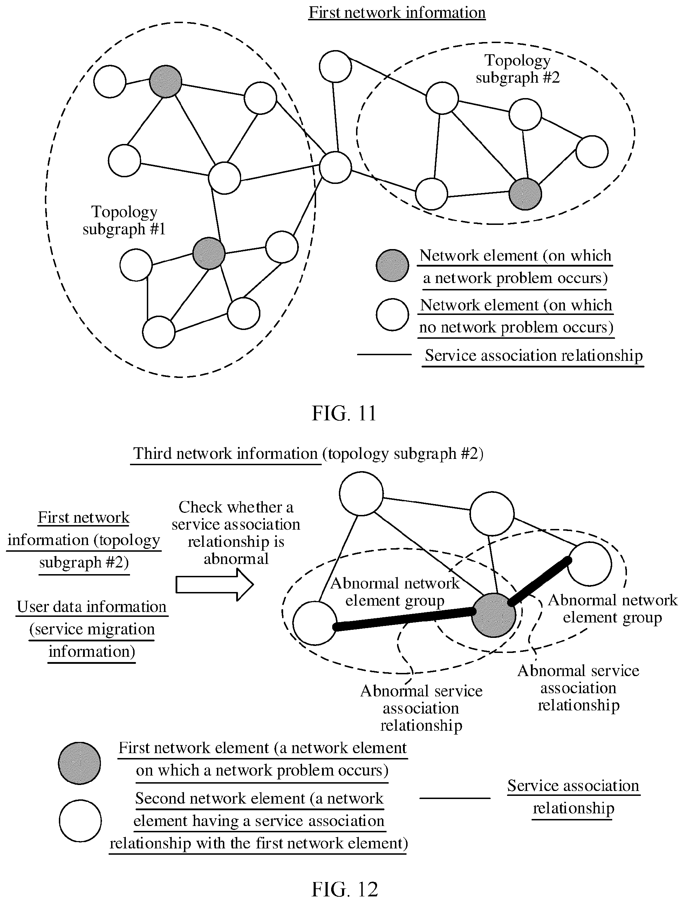

Optionally, to further improve accuracy of analyzing the network problem, a plurality of network element sets (where the network element set includes the first network element and the second network element) generated based on the second network information are combined. Specifically, a plurality of network element sets having a same network element are combined into one network element set, and the combined network element set is used as a topology subgraph for analyzing. FIG. 10 is used as an example. The network element set #1 and a network element set #2 include a same network element. The network problem that occurs on the network element set #1 may be different from a network problem that occurs on the network element set #2. Therefore, it means that the same network element included in the network element set #1 and the network element set #2 may be affected by two different network problems at a same time. To improve accuracy of analyzing the network problem, the network element set #1 and the network element set #2 are combined, a combined network element set is output, and a corresponding network topology subgraph is generated for subsequent processing. For ease of understanding, FIG. 11 is a diagram of another embodiment of the first network information according to an embodiment of this application. A network element set #1 and a network element set #2 are combined, a combined network element set is output, and a corresponding network topology subgraph, namely, a topology subgraph #1 in FIG. 11, is generated. The first network information (the topology subgraph #1) is generated based on the second network information (the network element set #1 and the network element set #2).

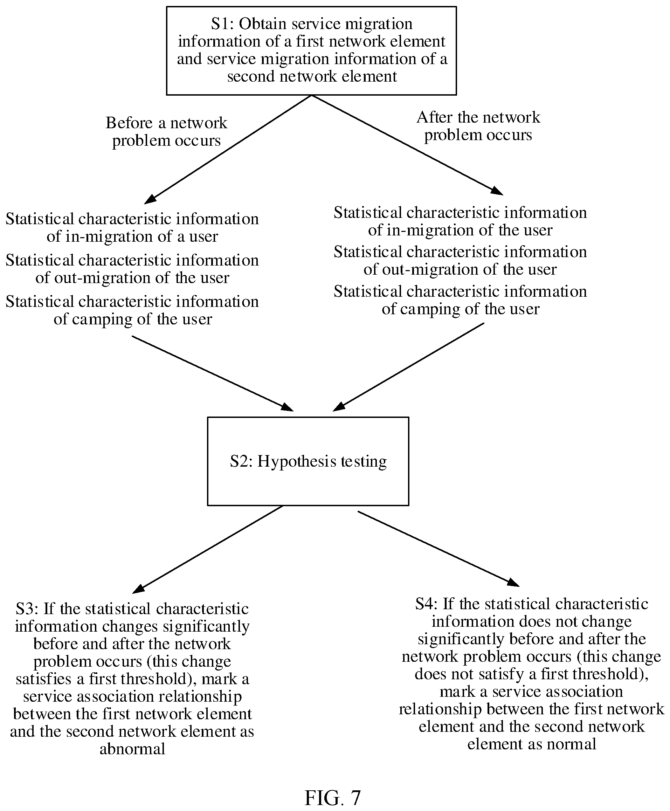

Further, to improve accuracy of a network problem analysis result, an abnormal network element group may be further determined from the first network element and the second network element that are indicated by the first network information, and the abnormal network element group includes at least two abnormal network elements. A change of service migration information of the abnormal network element before and after the network problem occurs satisfies a first threshold. In other words, an abnormal network element group that is greatly affected by the network problem is selected from the first network element and the second network element. For a specific procedure, refer to FIG. 7. FIG. 7 is a diagram of an embodiment of a network problem analysis method according to an embodiment of this application. The network problem analysis method provided in this embodiment of this application further includes the following steps.

S1: Obtain service migration information of the first network element and service migration information of the second network element.

In step S1, the service migration information of the first network element and the service migration information of the second network element are obtained. The service migration information indicates statistical characteristic information of a user that is served by a network element and who migrates in the network element, migrates out of the network element, and/or camps on the network element. The statistical characteristic information includes but is not limited to a total quantity, a proportion, an average value, a variance, and/or the like.

### S2: Hypothesis testing.

In step S2, a hypothesis testing method is used to determine whether statistical characteristic information #1 and statistical characteristic information #2 change significantly. Specifically, the service migration information includes: statistical characteristic information of a user who migrates in, migrates out of, and/or camps on a network element (where the network element is the first network element or the second network element) before the network problem occurs, where the statistical characteristic information is denoted as the statistical characteristic information #1; and statistical characteristic information of a user who migrates in, migrates out of, and/or camps on the network element after the network problem occurs, where the statistical characteristic information is denoted as the statistical characteristic information #2.

For example, if a network element on which the network problem occurs is a network element #A, one of network elements having a service association relationship with the network element #A is a network element #B. Statistics on a total quantity of users who migrate from the network element #A to the network element #B within one hour before the network problem occurs may be collected. Statistics on the total quantity of users who migrate in the network element are collected every 10 minutes, and total quantities are specifically 100, 99, 98, 102, 103, and 95. Within 10 minutes after the network problem occurs, statistics on a total quantity of users who migrate in the network element are collected every 10 minutes, and the total quantity is 25. Based on the statistical characteristic information #1 "100, 99, 98, 102, 103, and 95" and the statistical characteristic information #2 "25", the hypothesis testing method is used to determine whether the statistical characteristic information #1 and the statistical characteristic information #2 change significantly. Based on calculation by using a hypothesis testing method, an obtained probability that the total quantity of users who migrate in the network element after the network problem occurs and the quantity of users who migrate in the network element within one hour before the network problem occurs do not change significantly is 0.04. However, a preset first threshold is 0.1, which indicates that there is a significant change. The service association relationship between the network element #A and the network element #B is an abnormal service association relationship.

In this embodiment of this application, the hypothesis testing method is not limited.

If the statistical characteristic information changes significantly before and after the network problem occurs (this change satisfies the first threshold), step S3 is performed. If the statistical characteristic information does not change significantly before and after the network problem occurs (this change does not satisfy the first threshold), step S4 is performed.

S3: If the statistical characteristic information changes significantly before and after the network problem occurs (this change satisfies the first threshold), mark the service association relationship between the first network element and the second network element as abnormal.

In step S3, when a service association relationship between the first network element and a second network element is abnormal, the first network element and the second network element are used as a pair of abnormal network element groups, and the first network element and the second network element are abnormal network elements. It is considered that the second network element is significantly affected by the network problem.

Then, the network problem analysis apparatus marks the abnormal network element group in the first network information, and the network problem analysis apparatus marks a service association relationship of the abnormal network element group as an abnormal service association relationship, and generates third network information. For ease of understanding, refer to FIG. 12. FIG. 12 is a schematic of a network topology of the third network information according to an embodiment of this application. A topology subgraph #2 in FIG. 11 is used as an example. After the abnormal network element group is found by using the method in steps S1 to S3, the service association relationship of the abnormal network element group is marked as the abnormal service association relationship.

S4: If the statistical characteristic information does not change significantly before and after the network problem occurs (this change does not satisfy the first threshold), mark the service association relationship between the first network element and the second network element as normal.

In step S4, when a service association relationship between the first network element and a second network element is normal, it is considered that the second network element is not significantly affected by the network problem, and the second network element serves as a normal network element.

604: Determine an abnormal user from a plurality of users served by the abnormal network element, where the abnormal user is a user who migrates in, migrates out of, and/or camps on the abnormal network element after the network problem occurs.

In step 604, after the abnormal network element is determined, users who migrate in, migrate out of, and/or camp on the network element after the network problem occurs are found, and the users serve as abnormal users. For example, within one hour after the network problem occurs, the user who migrates in, migrates out of, and camps on the network element serves as the abnormal user.

According to the foregoing method, a network element that is significantly affected by the network problem may be selected from a large quantity of second network elements. The second network element and the first network element that are significantly affected by the network problem are analyzed together as abnormal network elements, to find abnormal users served by the abnormal network elements. This effectively reduces data processing complexity and a calculation difficulty, and improves accuracy of analyzing the network problem.

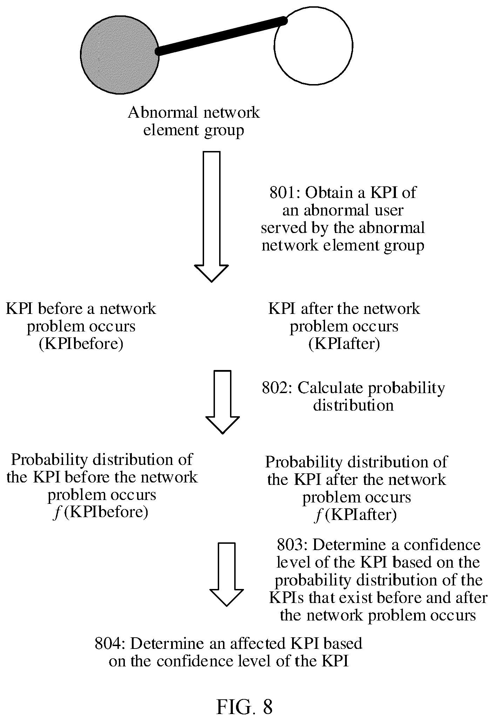

With reference to the foregoing embodiment, after the abnormal user is determined, a KPI (namely, an affected KPI) affected by the network problem in a plurality of KPIs of the abnormal user is further determined. FIG. 8 is a diagram of an embodiment of a network problem analysis method according to an embodiment of this application. The network problem analysis method provided in this embodiment of this application further includes the following steps.

801: Obtain a KPI of an abnormal user served by an abnormal network element group.

In step 801, at least one KPI of the abnormal user is determined, based on third network information and user data information, from the user data information of the abnormal user served by the abnormal network group (an abnormal network element included in the abnormal network element group). The KPI may be a standardized KPI. Specifically, obtaining a KPI value of the abnormal user includes: obtaining a KPI value (KPIbefore) before a network problem occurs and a KPI value (KPIafter) after the network problem occurs.

802: Calculate probability distribution.

In step 802, after the KPI of the abnormal user is obtained, a distribution similarity measurement method is used to calculate a degree of a difference between distribution of KPIbefore and distribution of KPIafter.

For example, the KPI is an RSRP, and RSRP value intervals are classified into four parts, which are respectively -130 decibels relative to one milliwatt (decibel relative to one milliwatt, dBm) to -120 dBm, -120 dBm to -110 dBm, -110 dBm to -100 dBm, and -100 dBm to 90 dBm. 100 RSRP values are collected within five minutes before the network problem occurs. Proportions of the RSRP values in the four intervals are 10%, 30%, 40%, and 20%. A proportion of KPIbefore is *f*(*KPI_{before}*). *f*(*KPI_{before}*) is used as the distribution of KPIbefore (in other words, probability distribution of KPIbefore). 100 RSRP values are collected within five minutes after the network problem occurs. Proportions of the RSRP values in the four intervals are 20%, 40%, 30%, and 10%. A proportion of KPIafter is *f*(*KPI_{after}*). *f*(*KPI_{after}*) is used as the distribution of KPIafter (in other words, probability distribution of KPIafter). The degree of the difference between the distribution of the two KPIs is calculated based on the distribution of KPIbefore and the distribution of KPIafter. A method for calculating the difference degree is, for example, JS divergence (where a value range is [0,1]). Smaller JS divergence indicates a smaller difference. Larger JS divergence indicates a larger difference.

803: Determine a confidence level of the KPI based on the probability distribution of the KPIs that exist before and after the network problem occurs.

In step 803, the confidence level of the KPI is obtained based on the probability distribution of KPIbefore and the probability distribution of KPIafter that are obtained through calculation in step 802. The confidence level of the KPI indicates a confidence level of impact of the network problem on the KPI.

804: Determine an affected KPI based on the confidence level of the KPI.

In step 804, the affected KPI is selected from at least one KPI based on the confidence level of the KPI. Specifically, a confidence level of the affected KPI is greater than a second threshold.

For example, the second threshold is 0.75. The KPI of the abnormal user includes: a rate, a quantity of scheduling times, a modulation and coding scheme (MCS), a dual-stream transmission ratio, an initial transmission bit error rate, a signal to interference plus noise ratio (SINR), channel quality information (CQI), a resource allocation success rate, an available resource, interference, and a reference signal received power (RSRP). If confidence levels of the rate, the MCS, the SINR, the CQI, and the RSRP are greater than 0.75, the rate, the MCS, the SINR, the CQI, and the RSRP are considered to be affected KPIs. Then, a deterioration degree of the affected KPI is calculated based on a statistical amount of the affected KPI that exists before the network problem occurs and a statistical amount of the affected KPI that exists after the network problem occurs.

In a possible implementation, fourth network information is generated based on a communication mechanism relationship and the affected KPI. The fourth network information indicates an impact relationship between the affected KPI and the network problem, the impact relationship indicated by the fourth network information is consistent with an impact relationship indicated by the communication mechanism relationship, and the communication mechanism relationship indicates an impact relationship between a plurality of KPIs and the network problem. Then, a network problem analysis result is generated based on the fourth network information.

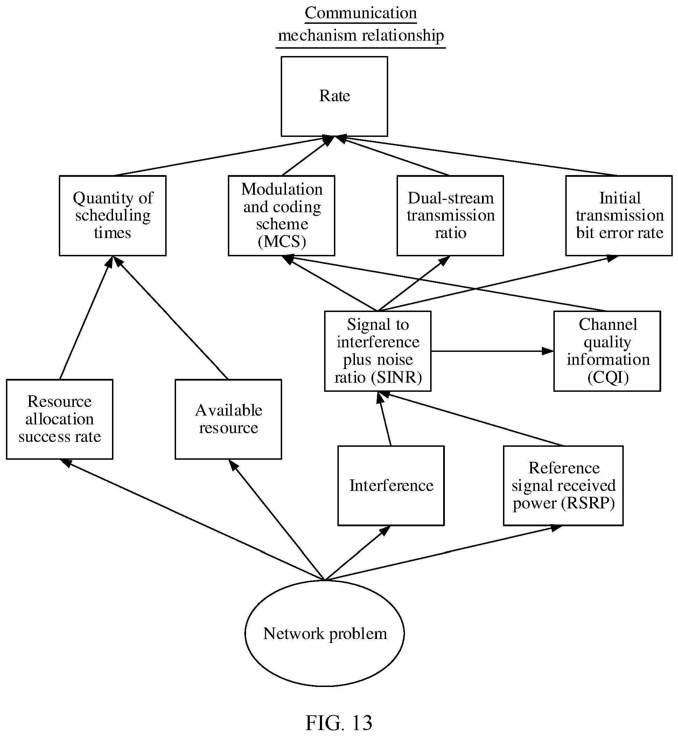

The communication mechanism relationship may also be referred to as a communication mechanism relationship diagram. For example, FIG. 13 is a diagram of a structure of the communication mechanism relationship diagram according to an embodiment of this application. The communication mechanism relationship diagram indicates an impact relationship between KPIs. The impact relationship indicated by the communication mechanism relationship diagram complies with an impact mechanism described in a communication protocol. For example, a communication network engineer may predefine the communication mechanism relationship diagram. The communication mechanism relationship diagram describes impact of different types of network problems on the KPIs and a causal sequence of impact between different KPIs. For example, as shown in FIG. 13, RSRP deterioration affects the SINR.

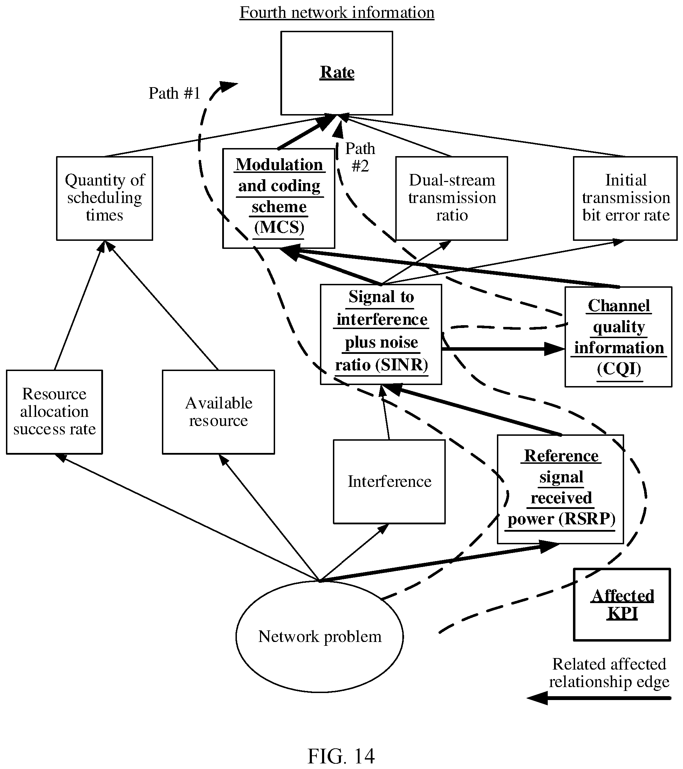

After the affected KPI is obtained, a graph search method is used to determine, from a perspective of the network problem based on the impact relationship indicated by the communication mechanism relationship diagram, a path connecting each affected KPI and the network problem. Then, a KPI topology structure describing the path is output as the fourth network information. For example, FIG. 14 is a schematic of a topology of the fourth network information according to an embodiment of this application. The fourth network information indicates an impact relationship between affected KPIs and the impact relationship between the affected KPI and the network problem.

Optionally, a key KPI may be determined from the affected KPIs. For example, the rate is selected as a key KPI in a plurality of affected KPIs shown in FIG. 14.

Finally, the network problem analysis result is generated based on the fourth network information (and network problem data information). The network problem analysis result includes any one or more of the following: the network problem, the abnormal network element on which the network problem occurs, the abnormal user affected by the network problem, the affected KPI of the abnormal user, the confidence level of the affected KPI, or the deterioration degree of the affected KPI, where the confidence level of the affected KPI is the confidence level of the impact of the network problem on the affected KPI, and the deterioration degree of the affected KPI indicates a change degree of the affected KPI after the network problem occurs. An example is shown in Table 4.

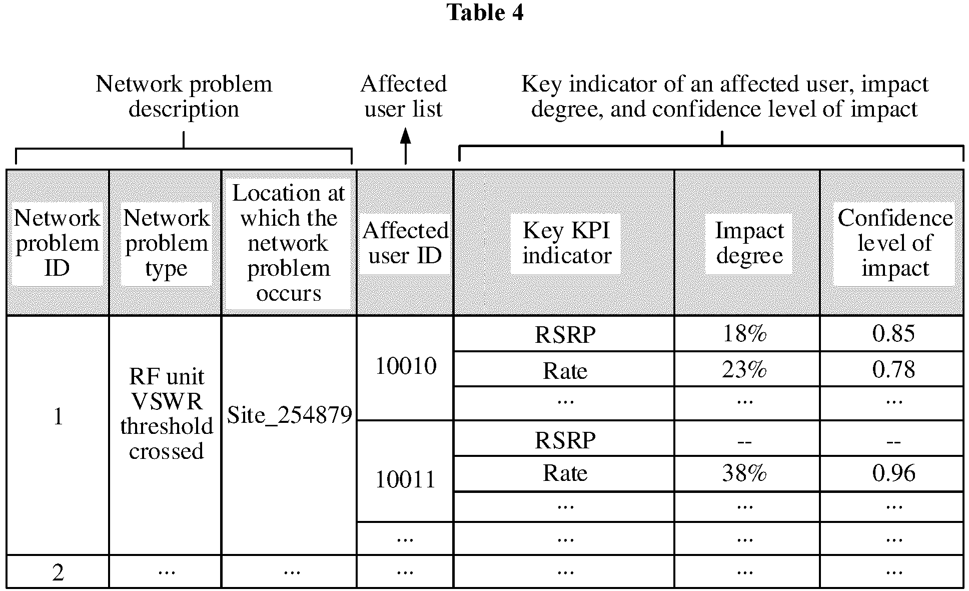

According to the foregoing method, a quantized network problem analysis result is output, so that the network problem analysis result is more intuitive, and accuracy of analyzing the network problem is improved.

It may be understood that, to implement functions in the foregoing embodiments, a computing device includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

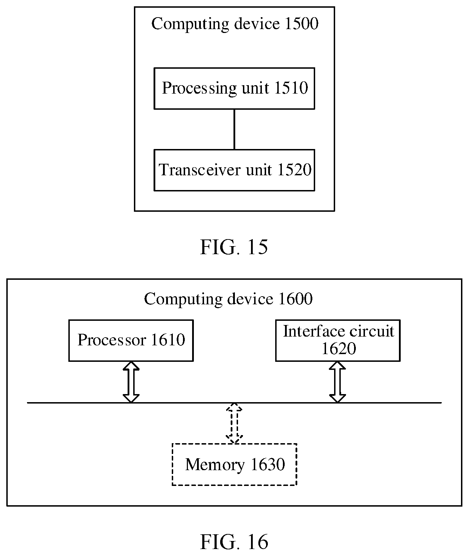

FIG. 15 is a diagram of a structure of a possible computing device 1500 according to an embodiment of this application. These computing devices may be configured to implement functions of the network problem analysis apparatus in the foregoing method embodiments, and therefore can also implement beneficial effects of the foregoing method embodiments.

As shown in FIG. 15, the computing device 1500 includes a processing unit 1510 and a transceiver unit 1520. The computing device 1500 is configured to implement functions of the network problem analysis apparatus in the method embodiments shown in FIG. 5 to FIG. 14.

For more detailed descriptions of the processing unit 1510 and the transceiver unit 1520, refer to related descriptions in the method embodiments shown in FIG. 3 to FIG. 8.

In an example, the computing device 1500 is used in a first network. The first network includes a plurality of network elements. The computing device includes:
the transceiver unit 1520, configured to obtain network problem data information, where the network problem data information indicates a network problem that occurs on the network element in the first network, where
the transceiver unit 1520 is further configured to obtain user data information, where the user data information is user data information of at least one user served by the first network, and the user data information includes a key performance indicator KPI of the user; and
the processing unit 1510, configured to generate a network problem analysis result based on the network problem data information and the user data information, where the network problem analysis result indicates an impact degree of the network problem on the KPI, and
the network problem analysis result includes:
   a confidence level of the KPI and/or a deterioration degree of the KPI, where the confidence level of the KPI is a confidence level of impact of the network problem on the KPI, and the deterioration degree of the KPI indicates a change degree of the KPI after the network problem occurs.

In a possible implementation, the processing unit 1510 is further configured to determine, based on the network problem data information, an abnormal network element from the plurality of network elements included in the first network, where the abnormal network element is a network element affected by the network problem. The processing unit 1510 is further configured to determine an abnormal user from a plurality of users served by the abnormal network element, where the abnormal user is a user who migrates in, migrates out of, and/or camps on the abnormal network element after the network problem occurs. The processing unit 1510 is further configured to generate the network problem analysis result based on a KPI of the abnormal user, where the KPI indicated by the network problem analysis result belongs to the abnormal user.

In a possible implementation, the processing unit 1510 is further configured to determine an affected KPI of the abnormal user from the KPI of the abnormal user, where the affected KPI is a KPI affected by the network problem in a plurality of KPIs of the abnormal user. The processing unit 1510 is further configured to generate the network problem analysis result based on the affected KPI of the abnormal user, where the KPI indicated by the network problem analysis result is the affected KPI.

In a possible implementation, the processing unit 1510 is further configured to determine, based on the network problem data information, the abnormal network element from the plurality of network elements included in the first network. The processing unit 1510 is further configured to generate first network information, where the first network information indicates a network topology structure of the abnormal network element, and a network topology result indicates a service association relationship between the network elements.

In a possible implementation, the transceiver unit 1520 is further configured to obtain network resource data information, where the network resource data information includes any one or more of the following information: configuration information of the first network or engineering parameter information of the first network. The processing unit 1510 is further configured to generate second network information based on the network resource data information, where the second network information indicates a network topology structure of the first network. The processing unit 1510 is further configured to determine, based on the network problem data information, the abnormal network element from a plurality of network elements indicated by the second network information, where the plurality of network elements indicated by the second network information are the plurality of network elements included in the first network.

In a possible implementation, the first network information indicates network topologies of a first network element and a second network element, the first network element is a network element on which the network problem occurs in the first network, and the second network element is a network element having a service association relationship with the first network element.

In a possible implementation, the processing unit 1510 is further configured to determine at least one abnormal network element group from the first network element and the second network element based on service migration information of the first network element and service migration information of the second network element, where the service migration information indicates statistical characteristic information of in-migration, out-migration, and/or camping of the user served by the network element. The abnormal network element group includes at least two abnormal network elements, a service association relationship exists between the abnormal network elements included in the abnormal network element group, and a change of service migration information of the abnormal network element before and after the network problem occurs satisfies a first threshold. The processing unit 1510 is further configured to: mark the service association relationship between the abnormal network elements as abnormal, and generate third network information based on the first network information, where the third network information indicates a topology structure of the abnormal network element group.

In a possible implementation, the processing unit 1510 is further configured to determine, based on the third network information, the abnormal user served by the abnormal network element. The processing unit 1510 is further configured to determine the affected KPI from the KPI of the abnormal user based on a confidence level of the KPI of the abnormal user, where a confidence level of the affected KPI is greater than a second threshold.

In a possible implementation, the processing unit 1510 is further configured to generate fourth network information based on a communication mechanism relationship and the affected KPI of the abnormal user, where the fourth network information indicates an impact relationship between the affected KPI and the network problem, the impact relationship indicated by the fourth network information is consistent with an impact relationship indicated by the communication mechanism relationship, and the communication mechanism relationship indicates an impact relationship between the plurality of KPIs and the network problem. The processing unit 1510 is further configured to generate the network problem analysis result based on the fourth network information and the network problem.

In a possible implementation, the fourth network information further includes a deterioration degree of a key KPI and the confidence level of the affected KPI, and the key KPI belongs to the affected KPI.

In a possible implementation, the network problem analysis result includes any one or more of the following:
the network problem, the abnormal network element on which the network problem occurs, the abnormal user affected by the network problem, the affected KPI of the abnormal user, the confidence level of the affected KPI, or a deterioration degree of the affected KPI, where the confidence level of the affected KPI is a confidence level of impact of the network problem on the affected KPI, and the deterioration degree of the affected KPI indicates a change degree of the affected KPI after the network problem occurs.

In a possible implementation, the deterioration degree of the KPI includes any one or more of the following:
a difference between a statistical amount of the KPI after the network problem occurs and a statistical amount of the KPI before the network problem occurs;
a ratio of a statistical amount of the KPI after the network problem occurs to a statistical amount of the KPI before the network problem occurs;
a difference between a statistical amount of the KPI after the network problem occurs and a third threshold; or
a ratio of a statistical amount of the KPI after the network problem occurs to a third threshold.

In a possible implementation, the statistical amount includes any one or more of the following:
an average value, a median, a lower quantile, an upper quantile, or cumulative probability distribution in any interval.

In a possible implementation, the network problem data information includes any one or more of the following information:
alarm information of the network element, performance deterioration information of the network element, or change information of the network element.

FIG. 16 is a diagram of a structure of a computing device 1600 according to an embodiment of this application. The computing device 1600 includes a processor 1610 and an interface circuit 1620. The processor 1610 and the interface circuit 1620 are coupled to each other. It can be understood that the interface circuit 1620 may be a transceiver or an input/output interface. Optionally, the computing device 1600 may further include a memory 1630, configured to: store instructions executed by the processor 1610, store input data required by the processor 1610 to run instructions, or store data generated after the processor 1610 runs instructions.

When the computing device 1600 is configured to implement the methods shown in FIG. 5 to FIG. 14, the processor 1610 is configured to implement a function of the processing unit 1510, and the interface circuit 1620 is configured to implement a function of the transceiver unit 1520.

In an example, the computing device 1600 is used in a first network. The first network includes a plurality of network elements. The computing device includes the interface circuit 1620 and the processor 1610.

The interface circuit 1620 is configured to obtain network problem data information, where the network problem data information indicates a network problem that occurs on the network element in the first network.

The interface circuit 1620 is further configured to obtain user data information, where the user data information is user data information of at least one user served by the first network, and the user data information includes a key performance indicator KPI of the user.

The processor 1610 is configured to generate a network problem analysis result based on the network problem data information and the user data information, where the network problem analysis result indicates an impact degree of the network problem on the KPI.

The network problem analysis result includes:
a confidence level of the KPI and/or a deterioration degree of the KPI, where the confidence level of the KPI is a confidence level of impact of the network problem on the KPI, and the deterioration degree of the KPI indicates a change degree of the KPI after the network problem occurs.

In a possible implementation, the processor 1610 is further configured to determine, based on the network problem data information, an abnormal network element from the plurality of network elements included in the first network, where the abnormal network element is a network element affected by the network problem. The processor 1610 is further configured to determine an abnormal user from a plurality of users served by the abnormal network element, where the abnormal user is a user who migrates in, migrates out of, and/or camps on the abnormal network element after the network problem occurs. The processor 1610 is further configured to generate the network problem analysis result based on a KPI of the abnormal user, where the KPI indicated by the network problem analysis result belongs to the abnormal user.

In a possible implementation, the processor 1610 is further configured to determine an affected KPI of the abnormal user from the KPI of the abnormal user, where the affected KPI is a KPI affected by the network problem in a plurality of KPIs of the abnormal user. The processor 1610 is further configured to generate the network problem analysis result based on the affected KPI of the abnormal user, where the KPI indicated by the network problem analysis result is the affected KPI.

In a possible implementation, the processor 1610 is further configured to determine, based on the network problem data information, the abnormal network element from the plurality of network elements included in the first network. The processor 1610 is further configured to generate first network information, where the first network information indicates a network topology structure of the abnormal network element, and a network topology result indicates a service association relationship between the network elements.

In a possible implementation, the interface circuit 1620 is further configured to obtain network resource data information, where the network resource data information includes any one or more of the following information: configuration information of the first network or engineering parameter information of the first network. The processor 1610 is further configured to generate second network information based on the network resource data information, where the second network information indicates a network topology structure of the first network. The processor 1610 is further configured to determine, based on the network problem data information, the abnormal network element from a plurality of network elements indicated by the second network information, where the plurality of network elements indicated by the second network information are the plurality of network elements included in the first network.

In a possible implementation, the first network information indicates network topologies of a first network element and a second network element, the first network element is a network element on which the network problem occurs in the first network, and the second network element is a network element having a service association relationship with the first network element.

In a possible implementation, the processor 1610 is further configured to determine at least one abnormal network element group from the first network element and the second network element based on service migration information of the first network element and service migration information of the second network element, where the service migration information indicates statistical characteristic information of in-migration, out-migration, and/or camping of the user served by the network element. The abnormal network element group includes at least two abnormal network elements, a service association relationship exists between the abnormal network elements included in the abnormal network element group, and a change of service migration information of the abnormal network element before and after the network problem occurs satisfies a first threshold. The processor 1610 is further configured to: mark the service association relationship between the abnormal network elements as abnormal, and generate third network information based on the first network information, where the third network information indicates a topology structure of the abnormal network element group.

In a possible implementation, the processor 1610 is further configured to determine, based on the third network information, the abnormal user served by the abnormal network element. The processor 1610 is further configured to determine the affected KPI from the KPI of the abnormal user based on a confidence level of the KPI of the abnormal user, where a confidence level of the affected KPI is greater than a second threshold.

In a possible implementation, the processor 1610 is further configured to generate fourth network information based on a communication mechanism relationship and the affected KPI of the abnormal user, where the fourth network information indicates an impact relationship between the affected KPI and the network problem, the impact relationship indicated by the fourth network information is consistent with an impact relationship indicated by the communication mechanism relationship, and the communication mechanism relationship indicates an impact relationship between the plurality of KPIs and the network problem. The processor 1610 is further configured to generate the network problem analysis result based on the fourth network information and the network problem.

In a possible implementation, the fourth network information further includes a deterioration degree of a key KPI and the confidence level of the affected KPI, and the key KPI belongs to the affected KPI.

In a possible implementation, the network problem analysis result includes any one or more of the following:
the network problem, the abnormal network element on which the network problem occurs, the abnormal user affected by the network problem, the affected KPI of the abnormal user, the confidence level of the affected KPI, or a deterioration degree of the affected KPI, where the confidence level of the affected KPI is a confidence level of impact of the network problem on the affected KPI, and the deterioration degree of the affected KPI indicates a change degree of the affected KPI after the network problem occurs.

In a possible implementation, the deterioration degree of the KPI includes any one or more of the following:
a difference between a statistical amount of the KPI after the network problem occurs and a statistical amount of the KPI before the network problem occurs;
a ratio of a statistical amount of the KPI after the network problem occurs to a statistical amount of the KPI before the network problem occurs;
a difference between a statistical amount of the KPI after the network problem occurs and a third threshold; or
a ratio of a statistical amount of the KPI after the network problem occurs to a third threshold.

In a possible implementation, the statistical amount includes any one or more of the following:
an average value, a median, a lower quantile, an upper quantile, or cumulative probability distribution in any interval.

In a possible implementation, the network problem data information includes any one or more of the following information:
alarm information of the network element, performance deterioration information of the network element, or change information of the network element.

The interface circuit 1620 may be further connected to a transceiver. The transceiver may be configured to support receiving or sending of an air interface signal between a computing device and a network device, and between a computing device and a terminal device. The transceiver may be connected to a plurality of antennas. The transceiver includes a transmitter Tx and a receiver Rx. Specifically, one or more antennas may receive an air interface signal, and the receiver Rx of the transceiver is configured to: receive the air interface signal from the antenna, convert the air interface signal into a digital baseband signal or a digital intermediate frequency signal, and provide the digital baseband signal or the digital intermediate frequency signal to the processor 1610, so that the processor 1610 performs further processing, for example, demodulation processing and decoding processing, on the digital baseband signal or the digital intermediate frequency signal. In addition, the transmitter Tx of the transceiver is further configured to: receive a modulated digital baseband signal or digital intermediate frequency signal from the processor 1610, convert the modulated digital baseband signal or digital intermediate frequency signal into an air interface signal, and send the air interface signal through one or more antennas.

The foregoing computing device may also be a chip. The transceiver unit 1620 may be an input and/or output circuit of the chip, or a communication interface. The chip may be used for a terminal, a base station, or another network device. In a possible design, the computing device includes a means (means) configured to generate data, and a means (means) configured to send data. Functions of the means for generating data and the means for sending data may be implemented by using one or more processors. For example, data may be generated by using one or more processors, and the data may be sent by using a transceiver, an input/output circuit, or an interface of a chip. For the data, refer to related descriptions in embodiments of this application. In a possible design, the computing device includes a means (means) configured to receive data, and a means (means) configured to send uplink data. For the data and how to send the uplink data based on the data, refer to related descriptions in embodiments of this application. For example, the data may be received by using a transceiver, an input/output circuit, or an interface of a chip.

When the foregoing computing device is a chip used in a terminal, the chip in the terminal implements a function of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the foregoing computing device is a module used in a base station, the module in the base station implements a function of the base station in the foregoing method embodiments. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A network problem analysis method, wherein the method is applied to a first network, the first network comprises a plurality of network elements, and the method comprises:
obtaining network problem data information, wherein the network problem data information indicates a network problem that occurs on the network element in the first network;
obtaining user data information, wherein the user data information is user data information of at least one user served by the first network, and the user data information comprises a key performance indicator KPI of the user; and
generating a network problem analysis result based on the network problem data information and the user data information, wherein the network problem analysis result indicates an impact degree of the network problem on the KPI, and
the network problem analysis result comprises:
a confidence level of the KPI and/or a deterioration degree of the KPI, wherein the confidence level of the KPI is a confidence level of impact of the network problem on the KPI, and the deterioration degree of the KPI indicates a change degree of the KPI after the network problem occurs.

2. The method according to claim 1, wherein the generating a network problem analysis result based on the network problem data information and the user data information comprises:
determining, based on the network problem data information, an abnormal network element from the plurality of network elements comprised in the first network, wherein the abnormal network element is a network element affected by the network problem;
determining an abnormal user from a plurality of users served by the abnormal network element, wherein the abnormal user is a user who migrates in, migrates out of, and/or camps on the abnormal network element after the network problem occurs; and
generating the network problem analysis result based on a KPI of the abnormal user, wherein the KPI indicated by the network problem analysis result belongs to the abnormal user.

3. The method according to claim 2, wherein the generating the network problem analysis result based on a KPI of the abnormal user comprises:
determining an affected KPI of the abnormal user from the KPI of the abnormal user, wherein the affected KPI is a KPI affected by the network problem in a plurality of KPIs of the abnormal user; and
generating the network problem analysis result based on the affected KPI of the abnormal user, wherein the KPI indicated by the network problem analysis result is the affected KPI.

4. The method according to claim 2 or 3, wherein the determining, based on the network problem data information, an abnormal network element from the plurality of network elements comprised in the first network comprises:
determining, based on the network problem data information, the abnormal network element from the plurality of network elements comprised in the first network; and
generating first network information, wherein the first network information indicates a network topology structure of the abnormal network element, and a network topology result indicates a service association relationship between the network elements.

5. The method according to claim 4, wherein the marking, based on the network problem data information, the abnormal network element from the plurality of network elements comprised in the first network comprises:
obtaining network resource data information, wherein the network resource data information comprises any one or more of the following information: configuration information of the first network or engineering parameter information of the first network;
generating second network information based on the network resource data information, wherein the second network information indicates a network topology structure of the first network; and
determining, based on the network problem data information, the abnormal network element from a plurality of network elements indicated by the second network information, wherein the plurality of network elements indicated by the second network information are the plurality of network elements comprised in the first network.

6. The method according to claim 4 or 5, wherein the first network information indicates network topologies of a first network element and a second network element, the first network element is a network element on which the network problem occurs in the first network, and the second network element is a network element having a service association relationship with the first network element.

7. The method according to claim 6, wherein the determining, based on the network problem data information, the abnormal network element from a plurality of network elements indicated by the second network information comprises:
determining at least one abnormal network element group from the first network element and the second network element based on service migration information of the first network element and service migration information of the second network element, wherein the service migration information indicates statistical characteristic information of in-migration, out-migration, and/or camping of the user served by the network element, wherein
the abnormal network element group comprises at least two abnormal network elements, a service association relationship exists between the abnormal network elements comprised in the abnormal network element group, and a change of service migration information of the abnormal network element before and after the network problem occurs satisfies a first threshold; and
marking the service association relationship between the abnormal network elements as abnormal, and generating third network information based on the first network information, wherein the third network information indicates a topology structure of the abnormal network element group.

8. The method according to claim 7, wherein the determining an affected KPI of the abnormal user from the KPI of the abnormal user comprises:
determining, based on the third network information, the abnormal user served by the abnormal network element; and
determining the affected KPI from the KPI of the abnormal user based on a confidence level of the KPI of the abnormal user, wherein a confidence level of the affected KPI is greater than a second threshold.

9. The method according to any one of claims 3 to 8, wherein the generating the network problem analysis result based on the affected KPI of the abnormal user comprises:
generating fourth network information based on a communication mechanism relationship and the affected KPI of the abnormal user, wherein the fourth network information indicates an impact relationship between the affected KPI and the network problem, the impact relationship indicated by the fourth network information is consistent with an impact relationship indicated by the communication mechanism relationship, and the communication mechanism relationship indicates an impact relationship between the plurality of KPIs and the network problem; and
generating the network problem analysis result based on the fourth network information and the network problem.

10. The method according to claim 9, wherein the fourth network information further comprises a deterioration degree of a key KPI and the confidence level of the affected KPI, and the key KPI belongs to the affected KPI.

11. The method according to any one of claims 1 to 10, wherein the network problem analysis result comprises any one or more of the following:
the network problem, the abnormal network element on which the network problem occurs, the abnormal user affected by the network problem, the affected KPI of the abnormal user, the confidence level of the affected KPI, or a deterioration degree of the affected KPI, wherein the confidence level of the affected KPI is a confidence level of impact of the network problem on the affected KPI, and the deterioration degree of the affected KPI indicates a change degree of the affected KPI after the network problem occurs.

12. The method according to any one of claims 1 to 11, wherein the deterioration degree of the **KPI** comprises any one or more of the following:
a difference between a statistical amount of the KPI after the network problem occurs and a statistical amount of the KPI before the network problem occurs;
a ratio of a statistical amount of the KPI after the network problem occurs to a statistical amount of the KPI before the network problem occurs;
a difference between a statistical amount of the KPI after the network problem occurs and a third threshold; or
a ratio of a statistical amount of the KPI after the network problem occurs to a third threshold.

13. The method according to claim 12, wherein the statistical amount comprises any one or more of the following:
an average value, a median, a lower quantile, an upper quantile, or cumulative probability distribution in any interval.

14. The method according to any one of claims 1 to 13, wherein the network problem data information comprises any one or more of the following information:
alarm information of the network element, performance deterioration information of the network element, or change information of the network element.

15. A network problem analysis apparatus, wherein the network problem analysis apparatus is used in a first network, the first network comprises a plurality of network elements, and the network problem analysis apparatus comprises:
a transceiver module, configured to obtain network problem data information, wherein the network problem data information indicates a network problem that occurs on the network element in the first network, wherein
the transceiver module is further configured to obtain user data information, wherein the user data information is user data information of at least one user served by the first network, and the user data information comprises a key performance indicator KPI of the user; and
a processing module, configured to generate a network problem analysis result based on the network problem data information and the user data information, wherein the network problem analysis result indicates an impact degree of the network problem on the KPI, and
the network problem analysis result comprises:
a confidence level of the KPI and/or a deterioration degree of the KPI, wherein the confidence level of the KPI is a confidence level of impact of the network problem on the KPI, and the deterioration degree of the KPI indicates a change degree of the KPI after the network problem occurs.

16. The network problem analysis apparatus according to claim 15, wherein the processing module is further configured to determine, based on the network problem data information, an abnormal network element from the plurality of network elements comprised in the first network, wherein the abnormal network element is a network element affected by the network problem;
the processing module is further configured to determine an abnormal user from a plurality of users served by the abnormal network element, wherein the abnormal user is a user who migrates in, migrates out of, and/or camps on the abnormal network element after the network problem occurs; and
the processing module is further configured to generate the network problem analysis result based on a KPI of the abnormal user, wherein the KPI indicated by the network problem analysis result belongs to the abnormal user.

17. The network problem analysis apparatus according to claim 16, wherein the processing module is further configured to determine an affected KPI of the abnormal user from the KPI of the abnormal user, wherein the affected KPI is a KPI affected by the network problem in a plurality of KPIs of the abnormal user; and
the processing module is further configured to generate the network problem analysis result based on the affected KPI of the abnormal user, wherein the KPI indicated by the network problem analysis result is the affected KPI.

18. The network problem analysis apparatus according to claim 16 or 17, wherein
the processing module is further configured to determine, based on the network problem data information, the abnormal network element from the plurality of network elements comprised in the first network; and
the processing module is further configured to generate first network information, wherein the first network information indicates a network topology structure of the abnormal network element, and a network topology result indicates a service association relationship between the network elements.

19. The network problem analysis apparatus according to claim 18, wherein the transceiver module is further configured to obtain network resource data information, wherein the network resource data information comprises any one or more of the following information: configuration information of the first network or engineering parameter information of the first network;
the processing module is further configured to generate second network information based on the network resource data information, wherein the second network information indicates a network topology structure of the first network; and
the processing module is further configured to determine, based on the network problem data information, the abnormal network element from a plurality of network elements indicated by the second network information, wherein the plurality of network elements indicated by the second network information are the plurality of network elements comprised in the first network.

20. The network problem analysis apparatus according to claim 18 or 19, wherein the first network information indicates network topologies of a first network element and a second network element, the first network element is a network element on which the network problem occurs in the first network, and the second network element is a network element having a service association relationship with the first network element.

21. The network problem analysis apparatus according to claim 20, wherein the processing module is further configured to determine at least one abnormal network element group from the first network element and the second network element based on service migration information of the first network element and service migration information of the second network element, wherein the service migration information indicates statistical characteristic information of in-migration, out-migration, and/or camping of the user served by the network element, wherein
the abnormal network element group comprises at least two abnormal network elements, a service association relationship exists between the abnormal network elements comprised in the abnormal network element group, and a change of service migration information of the abnormal network element before and after the network problem occurs satisfies a first threshold; and
the processing module is further configured to: mark the service association relationship between the abnormal network elements as abnormal, and generate third network information based on the first network information, wherein the third network information indicates a topology structure of the abnormal network element group.

22. The network problem analysis apparatus according to claim 20, wherein the processing module is further configured to determine, based on the third network information, the abnormal user served by the abnormal network element; and
the processing module is further configured to determine the affected KPI from the KPI of the abnormal user based on a confidence level of the KPI of the abnormal user, wherein a confidence level of the affected KPI is greater than a second threshold.

23. The network problem analysis apparatus according to any one of claims 17 to 22, wherein the processing module is further configured to generate fourth network information based on a communication mechanism relationship and the affected KPI of the abnormal user, wherein the fourth network information indicates an impact relationship between the affected KPI and the network problem, the impact relationship indicated by the fourth network information is consistent with an impact relationship indicated by the communication mechanism relationship, and the communication mechanism relationship indicates an impact relationship between the plurality of KPIs and the network problem; and
the processing module is further configured to generate the network problem analysis result based on the fourth network information and the network problem.

24. The network problem analysis apparatus according to claim 23, wherein the fourth network information further comprises a deterioration degree of a key KPI and the confidence level of the affected KPI, and the key KPI belongs to the affected KPI.

25. The network problem analysis apparatus according to any one of claims 15 to 24, wherein the network problem analysis result comprises any one or more of the following:
the network problem, the abnormal network element on which the network problem occurs, the abnormal user affected by the network problem, the affected KPI of the abnormal user, the confidence level of the affected KPI, or a deterioration degree of the affected KPI, wherein the confidence level of the affected KPI is a confidence level of impact of the network problem on the affected KPI, and the deterioration degree of the affected KPI indicates a change degree of the affected KPI after the network problem occurs.

26. The network problem analysis apparatus according to any one of claims 15 to 25, wherein the deterioration degree of the KPI comprises any one or more of the following:
a difference between a statistical amount of the KPI after the network problem occurs and a statistical amount of the KPI before the network problem occurs;
a ratio of a statistical amount of the KPI after the network problem occurs to a statistical amount of the KPI before the network problem occurs;
a difference between a statistical amount of the KPI after the network problem occurs and a third threshold; or
a ratio of a statistical amount of the KPI after the network problem occurs to a third threshold.

27. The network problem analysis apparatus according to claim 26, wherein the statistical amount comprises any one or more of the following:
an average value, a median, a lower quantile, an upper quantile, or cumulative probability distribution in any interval.

28. The network problem analysis apparatus according to any one of claims 15 to 27, wherein the network problem data information comprises any one or more of the following information:
alarm information of the network element, performance deterioration information of the network element, or change information of the network element.

29. A computing device, wherein the computing device comprises a processor and a memory; and
the processor in the computing device is configured to execute instructions stored in the memory in the computing device, to enable the computing device to perform the method according to any one of claims 1 to 14.

30. A computing device cluster, comprising at least one computing device, wherein each computing device comprises a processor and a memory; and
the processor in the at least one computing device is configured to execute instructions stored in the memory in the at least one computing device, to enable the computing device cluster to perform the method according to any one of claims 1 to 14.

31. A computer program product comprising instructions, wherein when the instructions are run by a computing device cluster, the computing device cluster is enabled to perform the method according to any one of claims 1 to 14.

32. A computer-readable storage medium, comprising computer program instructions, wherein when the computer program instructions are executed by a computing device cluster, the computing device cluster performs the method according to any one of claims 1 to 14.
